(19) Europäisches Patentamt
European Patent Office
Office européen des brevets

(11) EP 0 588 763 B1

(12) **EUROPÄISCHE PATENTSCHRIFT**

(45) Veröffentlichungstag und Bekanntmachung des Hinweises auf die Patenterteilung:
**17.12.1997 Patentblatt 1997/51**

(51) Int Cl.[6]: **C09B 67/20**

(21) Anmeldenummer: **93810599.6**

(22) Anmeldetag: **24.08.1993**

(54) **Stabilisierung von organischen Pigmenten**

Stabilisation of organic pigments

Stabilisation de pigments organiques

(84) Benannte Vertragsstaaten:
**CH DE FR GB IT LI**

(30) Priorität: **03.09.1992 CH 2763/92**

(43) Veröffentlichungstag der Anmeldung:
**23.03.1994 Patentblatt 1994/12**

(73) Patentinhaber: **Ciba Specialty Chemicals Holding Inc.**
**4057 Basel (CH)**

(72) Erfinder: **Chassot, Laurent, Dr.**
**CH-1724 Praroman (CH)**

(56) Entgegenhaltungen:
**EP-A- 0 001 803**
**EP-A- 0 241 419**
**EP-A- 0 284 800**
**EP-A- 0 373 839**
**EP-A- 0 476 612**
**DD-C- 234 683**
**US-A- 4 210 612**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft die Stabilisierung von organischen Pigmenten gegen den Einfluss von Licht und Wetter durch Zusatz von Nitroxylverbindungen enthaltenden Polymeren.

Es ist bekannt, dass nicht alle organischen Pigmente immer sehr gute Licht- und Wetterechtheit zeigen. Einige davon haben sich allerdings als hochwertige Pigmente bewährt. Es ist nur gefunden worden, dass die Licht- und Wetterbeständigkeit von klassischen und sogar von hochwertigen Pigmenten (insbesondere bei transparenten Pigmentformen) überraschenderweise noch verbessert werden können, wenn die Pigmente mit einem Nitroxylverbindungen enthaltenden Polymeren vermischt werden.

Nitroxylverbindungen sind aus verschiedenen Publikationen als Stabilisatoren bekannt. In JP-A 75-58141 werden unter vielen anderen HALS (Hindered Amine Light Stabiliser) auch Nitroxylverbindungen beschrieben, die zusammen mit UV-Absorbern zur Stabilisierung von pigmentierten Kunststoffen gegen den Einfluss von Licht dienen. Es wird ausgeführt, dass die Wirkung der UV-Absorber als Lichtstabilisatoren für den Kunststoff durch die Pigmente beeinträchtigt wird, dass aber diese Beeinträchtigung durch einen HALS vermindert werden kann. Bevorzugt werden HALS, die keine Nitroxylgruppe enthalten. In US-Patent 3 970 632 wird eine Polymermasse enthaltend ein Chinophthalonpigment, welche dank Zugabe von HALS eine hohe Lichtbeständigkeit und Verblassungsfestigkeit aufweist, beschrieben. Obwohl ganz generisch auch Nitroxylverbindungen mit umfasst werden, sind spezifisch nur nitroxylgruppenfreie HALS aufgeführt. Polymere HALS sind ebenfalls als Stabilisatoren von Polymeren gegen den Abbau durch Licht bekannt und sind als solche z.B. in den US-Patenten 4 210 612, 4 276 401 und 4 294 949, in der DE-OS 3 229 640 und in der DD-PS 262 439 beschrieben. Auch gemäss diesen Publikationen, in denen die Nitroxylverbindungen generisch mit umfasst werden, werden nitroxylgruppenfreie HALS bevorzugt. Aus JP-A 82-119941 sind pigmentierte Polymere enthaltend einen UV-Absorber und einen HALS (ohne Hinweis auf Nitroxylverbindungen) zur Vorbeugung von Verblassung bekannt. In JP-A 90-99323 werden gegen die Verblassung durch die Einwirkung von Licht stabilisierte Laminate beschrieben, die in einer Zwischenschicht einen in einem organischen Lösungsmittel löslichen Farbstoff (irrtümlicherweise als Pigment bezeichnet) enthalten, der in gelöster Form mit einer Nitroxylverbindung behandelt wurde.

Aus diesen Publikationen ergibt sich für den Fachmann die Lehre, dass bei mit löslichen Farbstoffen gefärbten Kunststoffen unter bestimmten Bedingungen, z.B. in Zwischenschichten von Laminaten, bei Behandlung der gelösten Farbstoffe mit einer Nitroxylverbindung, die Verblassung durch Einwirkung von Licht vermindert werden kann, dass der gleiche Effekt aber bei mit Pigmenten pigmentierten Kunststoffen, zusammen mit der Stabilisierung des Kunststoffes, durch Beimischung eines nitroxylgruppenfreien HALS erzielt wird.

Es ist nur gefunden worden, dass die Licht- und Wetterbeständigkeit gewisser Pigmente des klassischen und sogar des hochwertigen Typs ganz überraschend durch Vermischung beziehungsweise Beschichtung der Pigmentpartikel mit einem Polymeren welches Nitroxylverbindungen bzw. entsprechende, die Gruppe >N-O- enthaltende Vorläufer (>N-OH, >N-O-Alkyl) enthält, noch verbessert werden kann.

Die vorliegende Erfindung betrifft demnach lichtstabilisierte Pigmentzusammensetzungen enthaltend

a) mindestens ein organisches Pigment ausgewählt aus der Gruppe bestehend aus Diketopyrrolopyrrole, Azopigmente, Chinacridone, Chinophthalone, Phthalocyanine, Indanthrone, Flavanthrone, Pyranthrone, Anthrachinone, Perylene, Dioxazine, Perinone, Thioindigo, Isoindoline, Isoindolinone und Metallkomplexe und

b) 0,01 bis 100 Gew.%, bezogen auf das Pigment, eines Kondensations- oder Additionspolymeren, dessen wiederkehrende Moleküleinheit mindestens einen eine Nitroxyl- oder Hydroxylaminogruppe enthaltenden Rest enthält oder durch eine eine Nitroxyl- oder Hydroxylaminogruppe enthaltende Seitengruppe substituiert ist, sowie dessen Mischpolymere untereinander oder mit Nitroxyl- oder Hydroxylamin-freien Komponenten.

Besonders geeignete Pigmente sind jene der Isoindolin-, Isoindolinon-, Metallkomplex- und insbesondere der Diketopyrrolopyrrol-, Azo-, Chinacridon-, Phthalocyanin-, Anthrachinon- und Perylenreihe. Es handelt sich dabei um allgemein bekannte und zum Teil im Handel erhältliche Produkte. Die Erfindung kommt insbesondere dann zum Tragen, wenn es sich um relativ unechte (klassische) Pigmente oder um hochwertige Pigmente in feiner (transparenter) Form handelt. Diketopyrrolopyrrolpigmente sind ganz besonders bevorzugt, insbesondere in feiner Form mit einer durchschnittlichen Partikelgrösse von 0,005 bis 0,1 µm..

Bei den polymeren Nitroxylverbindungen handelt es sich ebenfalls um bekannte Verbindungen. Sie werden z.B. in folgenden Publikationen offenbart:

F.E. Karrer, Makromol. Chem. (1980), 595-633;
T. Osa et al., Chem. Letters (1988), 1423-1426;
T. Kurosaki et al., J. Polymer Science 10 (1972), 3295-3310;
T. Kurosaki et al., J. Polymer Science 12 (1974), 1407-1420;

R. Seidemann et al, Makromol. Chem. 190, 975-983;
L. Dulog et al., Makromol. Chem. 190 (1989), 3117-3125.

Allenfalls neue verwendbare polymere Nitroxylverbindungen der obengenannten Definition können in Analogie zu allgemein bekannten Methoden gegebenenfalls aus bekannten HALS, wie sie z.B. in EP-A 1835, US-Patent 4 210 612, DE-OS 32 29 640, EP-A 47 967, US-Patent 4 547 548, US-Patent 4 477 615, und US-Patent 4 413 075 beschrieben sind, hergestellt werden.

Die Nitroxylverbindung wird vorzugsweise in einer Menge von 0,1-10 und insbesondere 0,5-15 Gew.%, bezogen auf das Pigment, eingesetzt.

Es können auch anorganische oder organische Salze von Nitroxylverbindungen verwendet werden, die durch Addition von Säuren in maximal den Nitroxylgruppen äquivalenten Mengen entstehen. Solche Säuren können anorganische Säuren, wie z.B. Schwefel-, Salz- oder Phosphorsäure, oder organische Carbonsäuren, wie Ameisen-, Essig-, Oxal-, Malein-, Benzoe- oder Salicylsäure, organische Sulfonsäuren wie Methan- oder p-Toluolsulfonsäure oder organische phosphorhaltige Säuren, wie Diphenylphosphorsäure, Methanphosphorsäure oder Diphenylphosphinsäure, sein.

Besonders geeignete polymere Nitroxylverbindungen sind Kondensations- oder Additionspolymere, deren wiederkehrende Moleküleinheit mindestens einen Rest der Formel

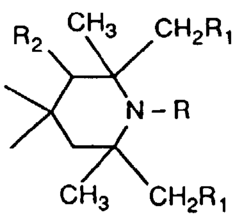

(I)

enthält oder mindestens einmal direkt oder indirekt durch eine der Seitengruppen der Formeln

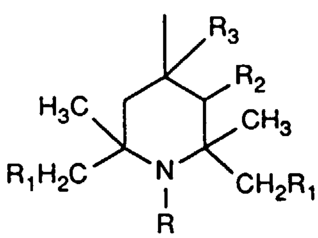
,
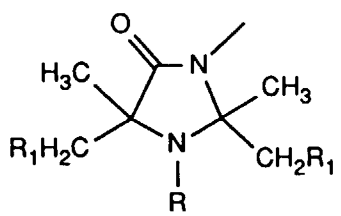
,
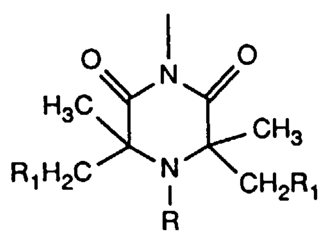

(II) (III) (IV)

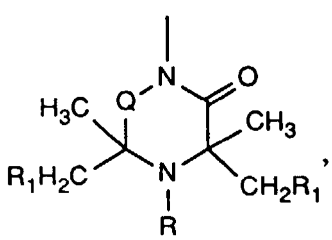
,
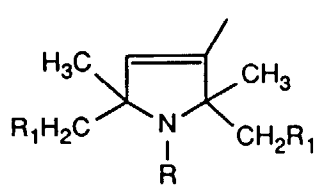
oder
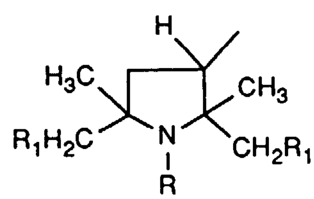

(V) (VI) (VII)

substituiert ist, worin R O· oder OH, $R_1$ Wasserstoff oder $C_1$-$C_4$-Alkyl, $R_2$ Wasserstoff oder $C_1$-$C_4$-Alkyl, $R_3$ Wasserstoff oder eine freie Valenz und Q $-CH_2-$, $-(CH_2)_2-$ oder $-CH_2-CH(CH_3)-$ bedeuten, sowie Mischpolymere untereinander oder mit Nitroxyl- und Hydroxylamin-freien Komponenten.

R ist bevorzugt O·.

Unter Kondensations- und Additionspolymere sind diejenigen Polymeren zu verstehen, die durch eine Polykondensations- oder Polyadditionsreaktion hergestellt werden. Beispiele hierfür sind Polyester, Polyether, Polyolefine, Polyamide, Polyimide, Polyurethane, Polyharnstoffe, Polyphosphate, Polyphosponate , Polycarbonate, Polyacetale, Phenol-formaldehydharze oder Polyphosphazene und deren Mischpolymere. Bevorzugt werden Polyester, Polyether, Polyolefine, Polyamide und Polyphosphat.

Das mittlere Molekulargewicht $M_w$ dieser Polymeren liegt zweckmässig zwischen 2000 und 100000, bevorzugt zwischen 5000 und 20000. Es wird nach der allgemein bekannten Methode der Gel Permeations-Chromatographie (GPC) bestimmt.

Unter den oben definierten Kondensations- und Additionspolymeren sind jene von ganz besonderem Interesse, deren wiederkehrende Moleküleinheit mindestens einen Rest der Formel

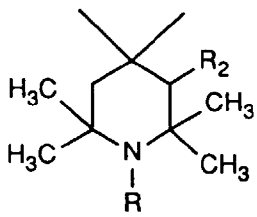

(VIII)

enthält oder mindestens einmal direkt oder indirekt durch eine Seitengruppe der Formel

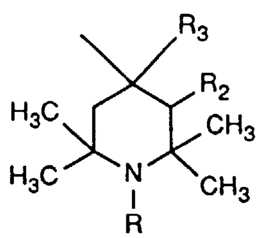

(IX)

substituiert ist, worin R, $R_2$ und $R_3$ die oben angegebene Bedeutung haben.

Bevorzugt werden Polymere deren wiederkehrende Moleküleinheit mindestens einen Rest der Formel

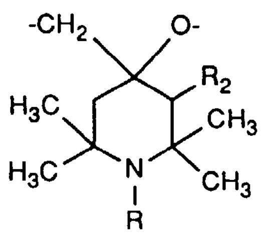

(X) oder

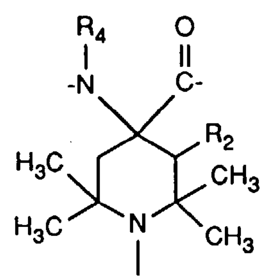

(XI)

enthält oder mindestens einmal durch eine Seitengruppe der Formel

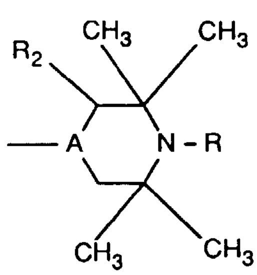

(XII)

substituiert ist,
worin A eine Gruppe der Formel

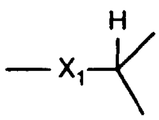 (XIII), 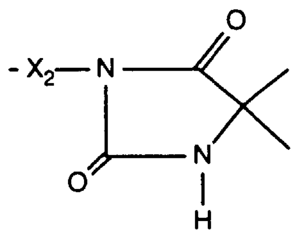 (XIV)

oder

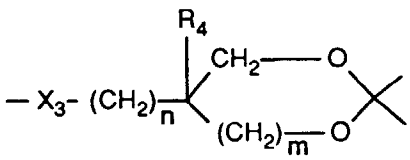 (XV)

ist, R und $R_2$ die oben angegebene Bedeutung haben, $R_4$ Wasserstoff, Methyl oder Ethyl bedeutet, m Null oder 1 ist, n, wenn m Null ist, 1 und wenn m 1 ist Null oder 1 bedeutet,

$X_1$ eine direkte Bindung, -O- oder eine Gruppe der Formel -CO-O-, $-CO-NR_5-$,

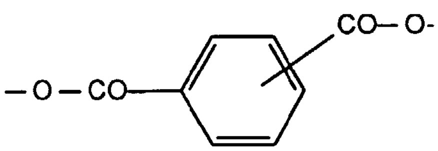 , 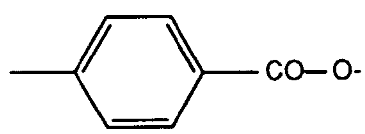

$-CH_2-O-$, $-NR_5-$, $-O-CH_2CH_2-NH-$, $-NH-CH_2CH_2-O-$, $-CO-NR_5-(CH_2)_p-CO-NH-$,

$-NH-(CH_2)_p-$ 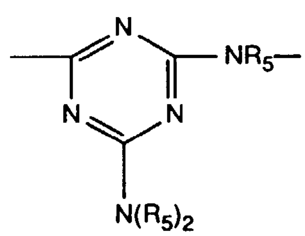 ,

$-(CH_2)_p-CO-O-$,
bedeutet, worin $R_5$ Wasserstoff, $C_1$-$C_{12}$-Alkyl, $C_5$-$C_7$-Cycloalkyl oder $C_7$-$C_{11}$-Aralkyl und p eine Zahl zwischen 1 und 6 bedeuten,

$X_2$ eine direkte Bindung oder eine Gruppe der Formel $-(CH_2)_p-$, $-CO-O-CHR_5-CH_2-$ oder $-CO-NR_4-CHR_5-CH_2-$ ist, worin $R_4$, $R_5$ und p die oben angegebene Bedeutung haben, und

$X_3$ eine direkte Bindung, -O-, oder eine Gruppe der Formel -CO-O-, $-O-CH_2-O-$ oder $-(CH_2)_p-$ bedeutet, worin p die oben angegebene Bedeutung hat.

Besonders bevorzugt sind folgende Polymere:

a) Polymere des gleichen Typs wie sie in EP-A 1835 (Anspruch 1) offenbart werden, mit einer wiederkehrenden Einheit der Formel

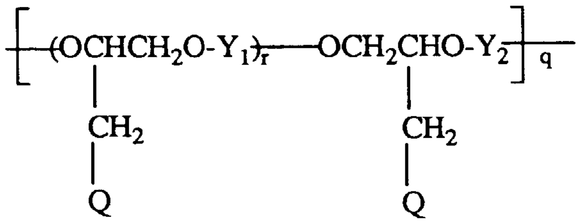

(XVI),

worin Q einen Rest der Formel XII ist, in welchem A eine Gruppe -O-CH⟨,

-NR$_5$-CH⟨ 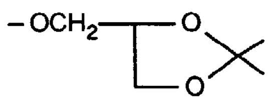, 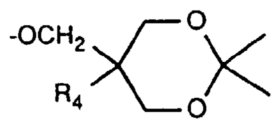 oder 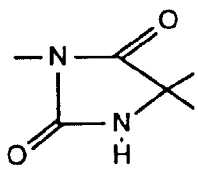

bedeutet,

R, $R_2$, $R_4$ und $R_5$ die oben angegebene Bedeutung haben,
q eine Zahl zwischen 10 und 50 und r Null oder 1 sind, und
wenn r Null ist,
$Y_2$ eine aliphatische, aromatische, araliphatische oder alicyclische Diacylgruppe mit bis zu 20 Kohlenstoffatomen ist,
wenn r 1 ist und Q einen Rest der Formel XII bedeutet, worin A -O-CH⟨,

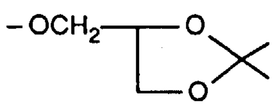, oder 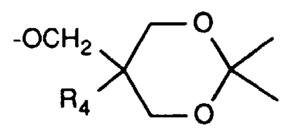

ist,
$Y_1$ eine gesättigte, aliphatische Diacylgruppe mit bis zu 20 Kohlenstoffatomen, eine Benzoldicarbonylgruppe, eine Cyclohexandicarbonylgruppe, eine Gruppe

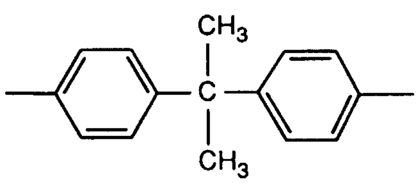 oder 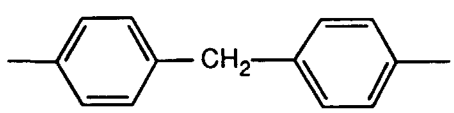

bedeutet, und,
wenn r 1 ist und Q einen Rest der Formel XII bedeutet, worin A -NR$_5$-CH⟨ oder

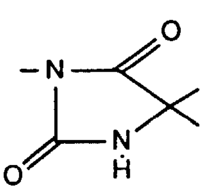

ist,

$Y_1$ eine gesättigte aliphatische Diacylgruppe mit bis zu 20 Kohlenstoffatomen, eine Benzoldicarbonylgruppe, eine Cyclohexandicarbonylgruppe, eine Gruppe

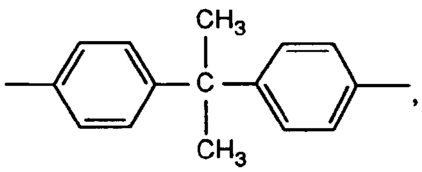
,
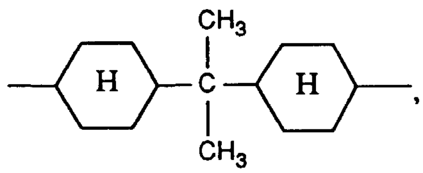
,

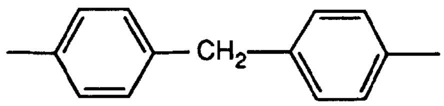

oder

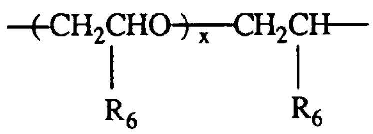

bedeutet, worin x Null oder eine Zahl von 1 bis 8 ist und $R_6$ Wasserstoff oder Methyl bedeutet, und

$Y_2$, wenn r 1 ist, eine gesättigte aliphatische Diacylgruppe mit bis zu 20 Kohlenstoffatomen, eine Benzoldicarbonylgruppe, eine Cyclohexandicarbonylgruppe, eine Alkylengruppe mit 2 bis 10 Kohlenstoffatomen, eine Xylylengruppe, eine Gruppe

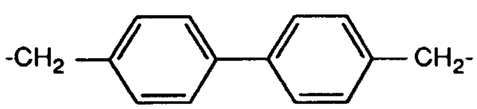

oder -CONH-$Y_3$-NHCO-,

worin $Y_3$ eine Alkylengruppe mit 2 bis 10 Kohlenstoffatomen oder eine unsubstituierte oder durch Methyl substituierte Phenylengruppe ist.

b) Polymere wie sie in US Patent 4 210 612 (Spalten 1 und 2) offenbart werden, mit einer wiederkehrenden Einheit der Formel

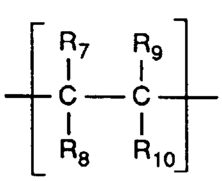

(XVII),

worin $R_7$ eine Gruppe der Formel

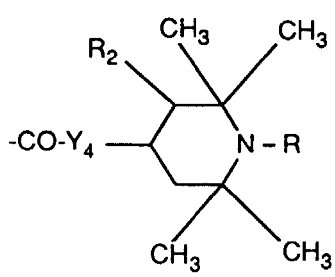 oder 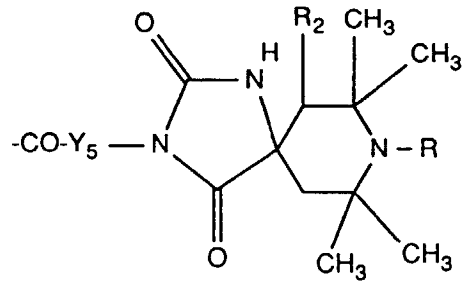 ,

worin R und $R_2$ die oben angegebene Bedeutung haben, $Y_4$ -O- oder $-NR_5-$ ist, wobei $R_5$ die oben angegebene Bedeutung hat, $Y_5$ eine Gruppe

$$-O{\left( CH_2\text{-}CH_2 \right)}_z- \quad \text{oder} \quad -NR_5{\left( CH_2\text{-}CH_2 \right)}_z-$$

bedeutet, worin z Null oder 1 bedeutet, $R_8$, $R_9$ und $R_{10}$ unabhängig voneinander Wasserstoff oder $C_1$-$C_4$-Alkyl, $R_9$ zusätzlich auch -COOH sind, und, wenn $R_8$ und $R_{10}$ Wasserstoff sind, $R_7$ und $R_9$ zusammen eine Gruppe der Formel

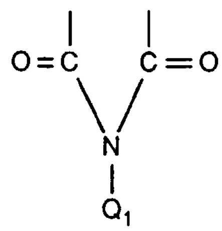

bilden, worin $Q_1$ eine Gruppe

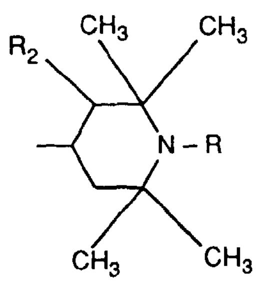

ist, in welcher R und $R_2$ die oben angegebene Bedeutung haben, sowie Copolymere von XVII mit einer mindestens eine polymerisierbare Doppelbindung enthaltenden Verbindung, wobei mindestens eine wiederkehrende Einheit XVII auf 10 Co-Komponenten enthalten ist.

c) Copolymere wie sie in der DE-OS 32 29 640 (Seiten 2-5) offenbart werden, aus

1) mindestens einem ungesättigten Derivat der Formel

$$R_{12}\text{-}Y_6\text{-CO-CH=CH-CO-}Y_7\text{-}R_{13} \qquad \text{(XVIII),}$$

und

2) mindestens einem Comonomeren der Formel

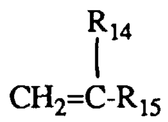

(XIX),

worin

$R_{12}$ eine Gruppe der Formel XII mit der oben angegebenen Bedeutung und
$R_{13}$ Wasserstoff, $C_1$-$C_{12}$-Alkyl, welches durch -O- unterbrochen sein kann, $C_3$-$C_5$-Alkenyl, $C_7$-$C_{11}$-Aralkyl, $C_5$-$C_7$-Cycloalkyl oder gleich $R_{12}$ sind,
$Y_6$ und $Y_7$ unabhängig voneinander -O- oder -$NR_5$- bedeuten, wobei $R_5$ die oben angegebene Bedeutung hat,
$R_{14}$ Wasserstoff oder Methyl ist,
$R_{15}$ Wasserstoff, $C_1$-$C_{12}$-Alkyl, Phenyl, Cl, CN, $C_1$-$C_4$-Alkoxy,
$C_2$-$C_5$-Alkanoyloxy, -$CONH_2$, -$COOR_{16}$, -$OR_{16}$ oder -$CONR_{17}R_{18}$ bedeutet,
$R_{16}$ Wasserstoff, $C_1$-$C_{12}$-Alkyl, $C_2$-$C_4$-Hydroxyalkyl oder eine Gruppe der Formel XII mit der oben angegebenen Bedeutung ist,
$R_{17}$ $C_1$-$C_{12}$-Alkyl, $C_5$-$C_7$-Cycloalkyl, Phenyl oder eine Gruppe $Q_2$ der Formel

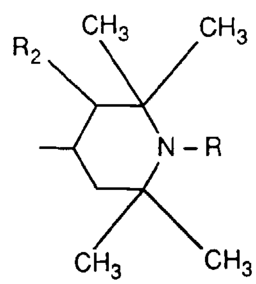

ist, worin R und $R_2$ die oben angegebene Bedeutung haben,
$R_{18}$ Wasserstoff, $C_1$-$C_{12}$-Alkyl, $C_5$-$C_7$-Cycloalkyl oder $C_7$-$C_{11}$-Aralkyl ist oder
$R_{17}$ und $R_{18}$ zusammen mit dem N-Atom, an das sie gebunden sind, einen 5-7-gliedrigen heterocyclischen Ring ausgewählt aus Pyrrolidin, Piperidin, Morpholin oder 4-Alkylpiperazin bilden,

oder Copolymere aus

1) mindestens einem Maleinimid der Formel

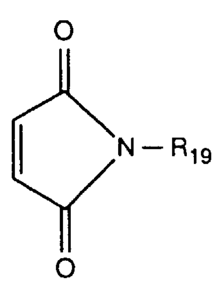

,

worin $R_{19}$ eine Gruppe $Q_2$ ist, und

2) mindestens einen Comonomer der Formel

$$CH_2{=}CH\text{-}R_{20},$$

worin $R_{20}$ Wasserstoff oder $C_1$-$C_{12}$-Alkyl ist.

d) Homopolymere mit einer wiederkehrenden Einheit der Formel

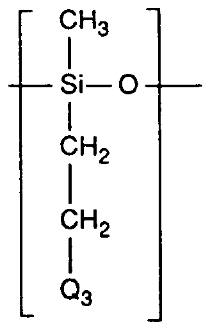

(XX),

worin $Q_3$ eine Gruppe der Formel

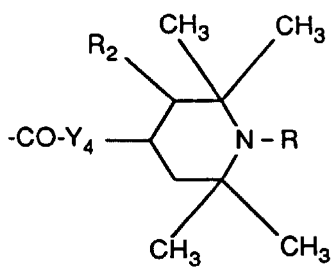

,

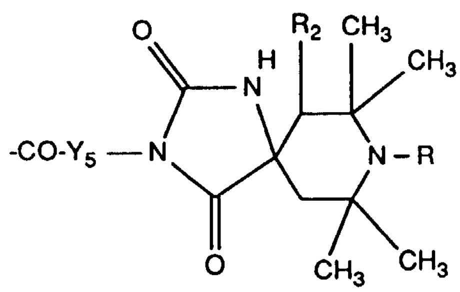

,

oder

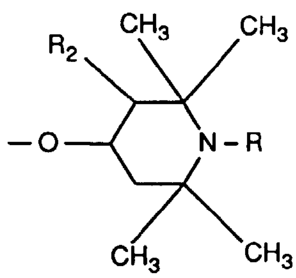

,

worin R und $R_2$ die oben angegebene Bedeutung haben, $Y_4$ -O- oder -$NR_5$- ist, wobei $R_5$ die oben angegebene Bedeutung hat, $Y_5$ eine Gruppe

$$-O\text{-}(CH_2\text{-}CH_2)_z\text{-} \quad \text{oder} \quad -NR_5\text{-}(CH_2\text{-}CH_2)_z\text{-}$$

bedeutet, worin z Null oder 1 bedeutet, sowie Copolymere von XX mit einer mindestens eine polymerisierbare Doppelbindung enthaltenden Verbindung, wobei mindestens eine wiederkehrende Einheit XX auf 10 Co-Komponenten enthalten ist.

e) Polymere des gleichen Typs wie sie in EP-A 47967 (Anspruch 1) offenbart werden, nämlich Polymere erhalten

durch Kondensation einer Verbindung der Formel

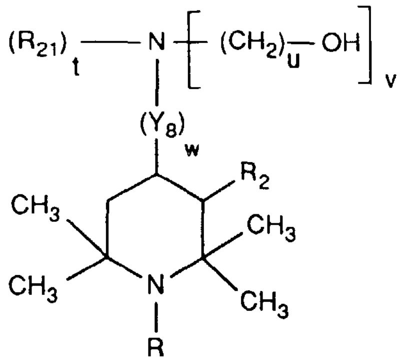

(XXI),

worin R und $R_2$ die oben angegebene Bedeutung haben, $R_{21}$ Wasserstoff ist, $Y_8$ eine Gruppe $-(CH_2)_u$-NH- bedeutet, u eine Zahl von 1-4, t Null oder 1, w Null oder 1 und v 1 oder 2 sind, mit der Bedingung, dass wenn v 2 ist t Null bedeutet,
mit einem Diisocyanat der Formel

$$O=C=N-Y_9-N=C=O \qquad (XXII),$$

worin $Y_9$ eine Gruppe
$-(CH_2)_q-$,

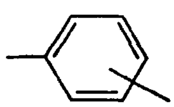 , 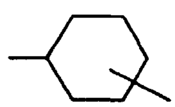 , 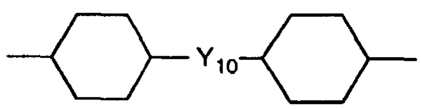 ,

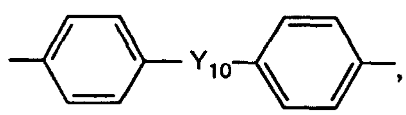 ,

worin $Y_{10}$ eine direkte Bindung, $-(CH_2)_b-$, $-NR_{22}-$, -O-, -S-, $-SO_2-$ bedeutet, a eine Zahl von 1 bis 10 und b eine Zahl von 1 bis 5 bedeuten und $R_{22}$ $C_1$-$C_4$-Alkyl ist.

f) Polymere wie sie im US-Patent 4 547 548 (Spalte 2) offenbart werden, der Formel

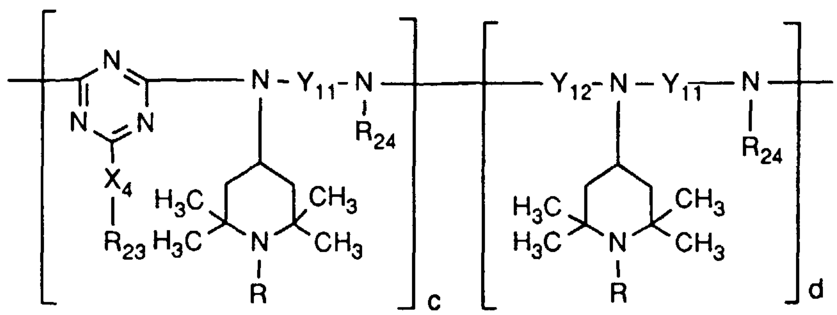

(XXIII),

worin R die oben angegebene Bedeutung hat, $R_{23}$ Wasserstoff, $C_1$-$C_{12}$-Alkyl, durch -OH, $C_1$-$C_4$-Alkyl oder $C_2$-$C_8$-Dialkylamino substituiertes $C_2$-$C_{12}$-Alkyl, $C_3$-$C_5$-Alkenyl, $C_5$-$C_7$-Cycloalkyl, $C_6$-$C_{18}$-Aryl, $C_7$-$C_{11}$-Aralkyl oder eine Gruppe

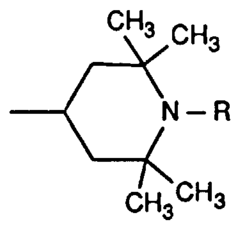

ist, $R_{24}$ $C_5$-$C_7$-Cycloalkyl, $C_6$-$C_{18}$-Aryl, $C_7$-$C_{11}$-Aralkyl oder eine Gruppe der Formel

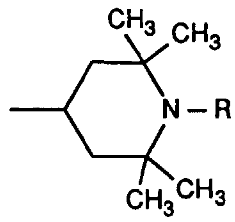

bedeutet, $X_4$ -O-, -S- oder -$NR_{25}$-, wobei $R_{25}$ die gleiche Bedeutung wie $R_{23}$ haben kann, $R_{23}$ $X_4$- als Einzelsubstituent betrachtet auch einen heterocyclischen Rest ausgewählt aus der Gruppe bestehend aus Pyrrolidin-1-yl, Piperidin-1-yl, Hexahydroazepin-1-yl, Morpholin-4-yl oder Methylpiperazin-1-yl bedeuten kann, $Y_{11}$ $C_2$-$C_{10}$-Alkylen, durch 1 oder 2 Sauerstoff- oder -NH-Gruppen unterbrochenes $C_4$-$C_{10}$-Alkylen, Cyclohexan, Phenylen, eine Gruppe

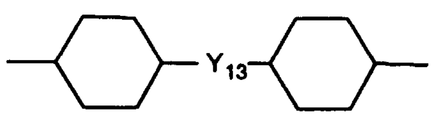 oder 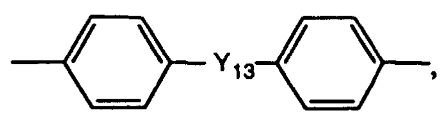,

worin $Y_{13}$ eine direkte Bindung oder ist, bedeutet,
$Y_{12}$ $C_2$-$C_{10}$-Hydroxyalkylen, $C_4$-$C_8$-Alkenylen oder eine Gruppe -CO-, -OOC-$Y_{11}$-COO-, -COO-$Y_{11}$-OOC-, -OCNH-$Y_{11}$-NHCO-, -HNOC-$Y_{11}$-CONH- oder -OC-$Y_{11}$-CO- darstellt,
wobei das Verhältnis c:d zwischen 4:1 und 1:4 liegt.

g) Polymere des gleichen Typs wie sie in US-Patent 4 477 615 (Spalten 1-3) offenbart werden, mit einer wiederkehrenden Einheit der Formel

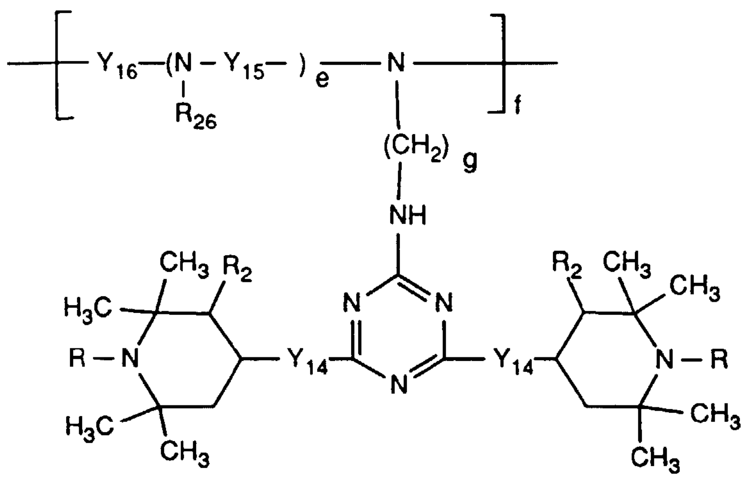

(XXIV),

worin R und $R_2$ die oben angegebene Bedeutung haben,

$Y_{14}$ -O- oder $-NR_{18}-$, wobei $R_{18}$ $C_1$-$C_{12}$-Alkyl, $C_5$-$C_7$-Cycloalkyl oder $C_7$-$C_{11}$-Aralkyl ist, g eine Zahl von 2 bis 12 sein kann
$Y_{15}$ die Gruppe

$$-(CH_2)_g-,$$

in der g die oben angegebene Bedeutung hat, die Gruppe

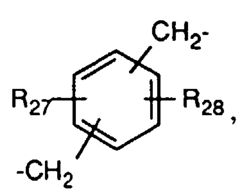

in der $R_{27}$ und $R_{28}$ unabhängig voneinander Wasserstoff oder Methyl sind,

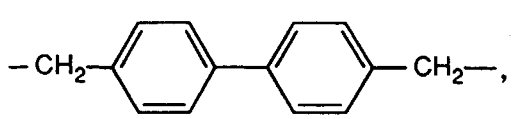

$$-CH_2-CH(OH)-CH_2-,$$

$$-CH_2-CH_2-(OCH_2-CH_2)_h-,$$

worin h 1 bis 3 sein kann,
$R_{26}$ Wasserstoff, $C_1$-$C_{12}$-Alkyl, eine Gruppe der Formel

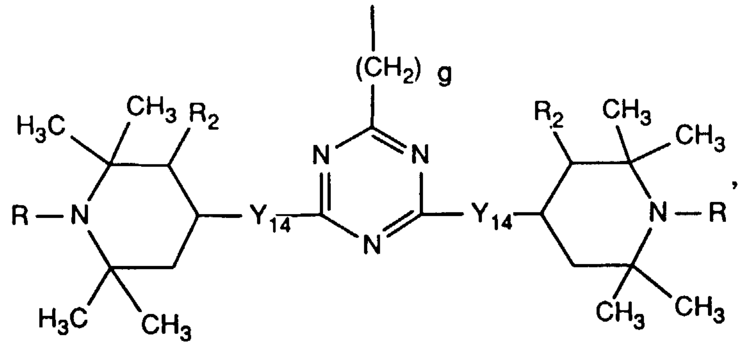

worin R, $R_2$, $Y_{14}$ und g die oben angegebene Bedeutung haben, oder eine Gruppe der Formel

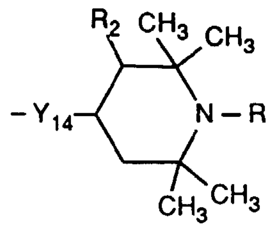

mit der oben angegebenen Bedeutung,
e Null oder 1 ist,
$Y_{16}$, wenn e Null ist, die Bedeutung von $Y_{15}$ oder eine Gruppe

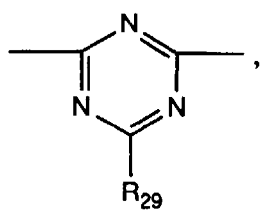

$-OC-Y_{17}-CO-$, $-OCHN-Y_{18}-NHCO-$, $-COO-Y_{19}-OOC-$ oder $-CH_2-Y_{20}-CO-$ bedeutet, worin $R_{29}$ Wasserstoff, $C_1$-$C_{12}$-Alkyl, $C_5$-$C_7$-Cycloalkyl, $C_3$-$C_5$-Alkenyl, $C_7$-$C_{11}$-Aralkyl, unsubstituiertes oder durch $C_1$-$C_4$-Alkyl substituiertes Phenyl oder eine Gruppe

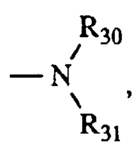

$-O-R_{30}$, $-S-R_{30}$ bedeutet, worin $R_{30}$ und $R_{31}$, unabhängig voneinander, Wasserstoff, $C_1$-$C_{12}$-Alkyl, $C_5$-$C_7$-Cycloalkyl, $C_7$-$C_{11}$-Aralkyl, unsubstituiertes oder durch $C_1$-$C_4$-Alkyl substituiertes Phenyl sind oder $R_{30}$ und $R_{31}$ zusammen mit dem N-Atom an dem sie gebunden sind Piperidin oder Morpholin bilden, oder $R_{29}$ eine Gruppe

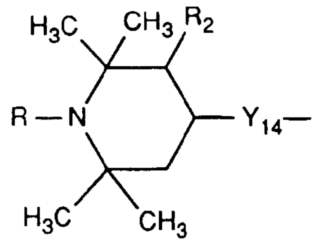

mit der oben angegebenen Bedeutung ist, $Y_{17}$

$-(CH_2)_i-$ oder 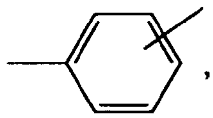 ,

worin i eine Zahl von 1 bis 8 ist,
$Y_{18}$

$-(CH_2)_k-$, 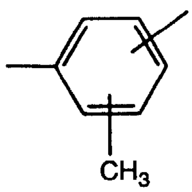 oder 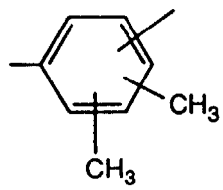 ,

$Y_{19}$

$-(CH_2)_k-$,

worin k eine Zahl von 2 bis 18 ist,
$Y_{20}$

$-(CH_2)_l-$ oder 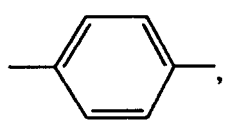 ,

worin 11 oder 2 ist,
bedeuten und f eine Zahl zwischen 2 und 2000 sein kann.

h) Polymere des gleichen Typs wie sie in US-Patent 4 413 075 offenbart (Spalten 1 und 2) werden, mit einer wiederkehrenden Einheit der Formel

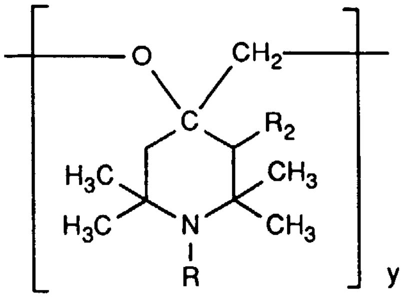

(XXV),

worin R und $R_2$ die oben angegebene Bedeutung haben und y zwischen 10 und 100 variieren kann.

Bedeuten etwaige Substituenten Alkyl, so kann dies eine verzweigte oder unverzweigte Alkylgruppe sein. Beispiele hierfür sind - im Rahmen der definierten C-Anzahl - Methyl, Ethyl, Isopropyl, Butyl, sec.Butyl, tert.Butyl, Isoamyl, n-Hexyl, 2-Ethylbutyl, n-Octyl, 2-Ethylhexyl, n-Decyl oder n-Dodecyl.

$C_3$-$C_5$-Alkenyl bedeutet beispielsweise Allyl, Methallyl oder Dimethylallyl.

Unter $C_7$-$C_{11}$-Aralkyl versteht man z.B. Benzyl, Phenylethyl, Phenylpropyl oder Naphthylmethyl. Bevorzugt ist Benzyl.

$C_5$-$C_7$-Cycloalkyl ist z.B. Cyclopentyl, Cycloheptyl und insbesondere Cyclohexyl.

Aliphatische, aromatische, araliphatische oder alicyclische Diacylgruppe mit bis zu 20 Kohlenstoffatomen bedeutet z.B. Gruppen der Formeln

$-OOC-(CH_2)_a-COO-$, 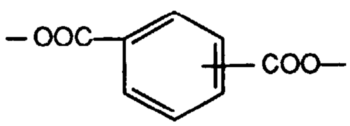 , 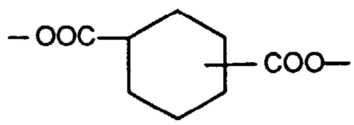 ,

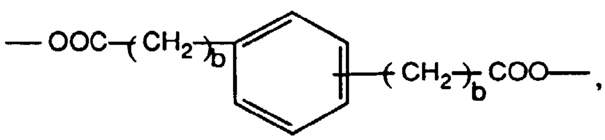 ,

worin a und b die oben bereits angegebene Bedeutung, nämlich eine Zahl zwischen 1 und 10 bzw. zwischen 1 und 5, haben.

$C_6$-$C_{18}$-Aryl bedeutet z.B. unsubstituiertes oder ein- oder zweimal durch $C_1$-$C_4$-Alkyl substituiertes Phenyl, Biphenyl oder Naphthyl.

Unter $C_2$-$C_{10}$-Alkylen versteht man z.B. Ethylen, n-Propylen, Tetramethylen, 2,2-Dimethyl-propylen, Pentamethylen, Octamethylen oder Decamethylen.

$C_4$-$C_8$-Alkenylen ist z.B. 2-Butenylen, 2-Hexenylen, 3-Hexenylen oder 2-Octenylen.

Ganz besonders bevorzugt werden Polymere mit einer wiederkehrenden Einheit der Formel

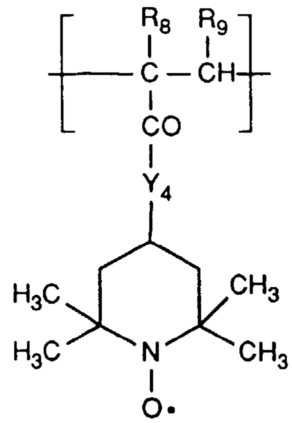 , 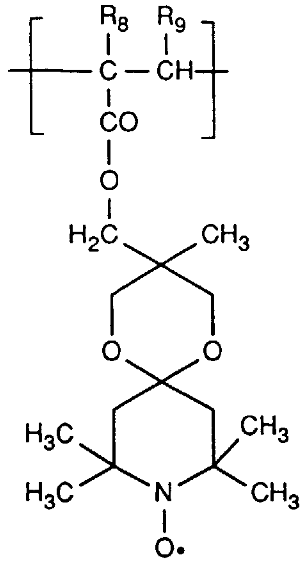 ,

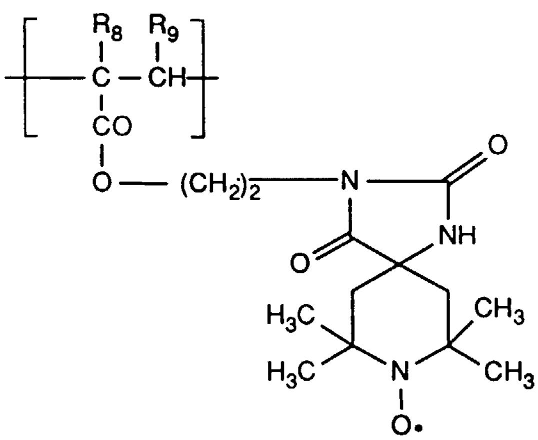 , 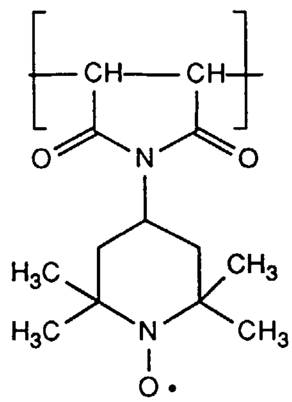

oder

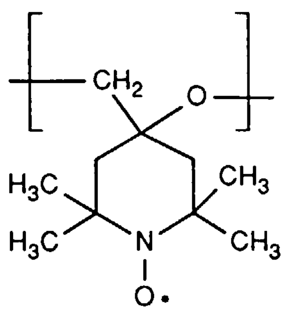 ,

worin $R_8$ und $R_9$ unabhängig voneinander Wasserstoff oder Methyl und $Y_4$ -O- oder -NH- bedeuten und wobei auch wiederkehrende Einheiten der Formel

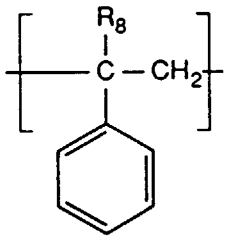 oder 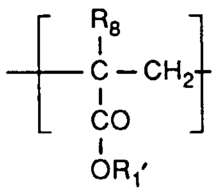 ,

worin $R_8$ die oben angegebene Bedeutung hat und $R_1'$ Wasserstoff oder Methyl ist, auftreten können, aber insbesondere Polymere mit einer wiederkehrenden Einheit der Formel

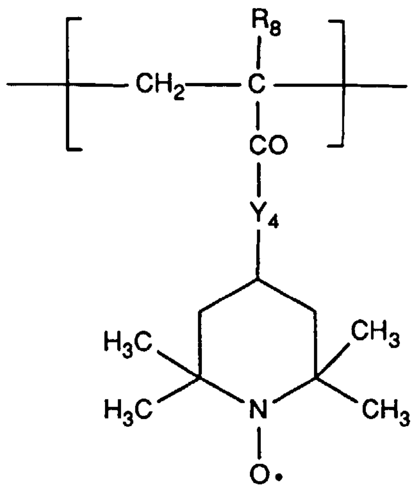

worin $R_8$ Wasserstoff oder Methyl und $Y_4$ -O- oder -NH- bedeuten, verwendet.

Wie oben bereits erwähnt werden die Pigmente durch die Beimischung einer polymeren Nitroxylverbindung gegen die Einwirkung von Licht und Wetter, die sowohl zur Verblassung, gegebenenfalls aber auch zum Nachdunkeln der Ausfärbung führen kann, stabilisiert. Die erfindungsgemässe Beimischung der polymeren Nitroxylverbindung zum Pigment hat sich in beiden Fällen als wirksam, d.h. als stabilisierend, erwiesen. Ein weiterer Gegenstand der Erfindung ist demnach ein Verfahren zur Licht- und Wetterstabilisierung von Pigmenten, ausgewählt aus der Gruppe bestehend aus Diketopyrrolopyrrole, Azopigmente, Chinacridone, Chinophthalone, Phthalocyanine, Indanthrone, Flavanthrone, Pyranthrone, Anthrachinone, Perylene, Dioxazine, Perinone, Thioindigo, Isoindoline, Isoindolinone und Metallkomplexe, durch Vermischung oder Beschichtung der Pigmentpartikel mit 0,01 bis 100 Gew %, bezogen auf das Pigment, eines Kondensations- oder Additionspolymeren, dessen wiederkehrende Moleküleinheit mindestens einen eine Nitroxyl- oder Hydroxylaminogruppe enthaltenden Rest enthält oder durch eine eine Nitroxyl- oder Hydroxylaminogruppe enthaltenden Seitengruppe substituiert ist, sowie dessen Mischpolymere untereinander oder mit Nitroxyl- oder Hydroxylamin-freien Komponenten. Anstelle der Nitroxylverbindung kann auch ein entsprechender die Gruppe $>$N-OT, worin T $C_1$-$C_{12}$-Alkyl bedeutet, enthaltender Vorläufer eingesetzt werden, der bei der thermischen Behandlung die Nitroxylverbindung freisetzt.

Dies kann nach folgenden verschiedenen Methoden erfolgen:

- Die polymere Nitroxylverbindung wird in der gewünschten Menge in einem organischen Lösungsmittel gelöst. Das Pigment wird nach üblichen Methoden in dieser Lösung suspendiert und die erhaltene Suspension wird gegebenenfalls in einer konventionellen Mühle vermahlen. Das Pigmentgemisch wird durch abdestillieren des Lösungsmittels oder durch Filtration isoliert und anschliessend getrocknet;

- Die erforderliche Menge der polymeren Nitroxylverbindung wird, in einem organischen Lösungsmittel gelöst, einer nach üblichen Methoden hergestellten Pigmentsuspension zugegeben und danach, durch Zugabe eines Lösungsmittels, in welchem sie nicht löslich ist, z.B. Wasser, ausgefällt und mitsuspendiert. Die Suspension wird anschliessend filtriert und die Pigmentmischung nach üblichen Methoden isoliert;

- Die polymere Nitroxylverbindung wird einer nach üblichen Methoden hergestellten Suspension zugegeben und mitsuspendiert. Die Suspension wird dann mit oder ohne Zusatz eines weiteren Lösungsmittels filtriert und die Festsubstanz isoliert;

- Ein Gemisch des organischen Pigments mit der polymeren Nitroxylverbindung im gewünschten Mischungsverhältnis wird in einer konventionellen Kugelmühle in Gegenwart eines Lösungsmittels nach üblichen Methoden vermahlen. Das Produkt wird durch Filtration oder durch Abdestillieren des Lösungsmittels isoliert;

- Das organische Pigment wird mit einer polymeren Verbindung enthaltend Reste der Formel I, worin R Wasserstoff bedeutet vermischt oder beschichtet, dann werden die Aminogruppen durch Oxydation nach allgemein bekannten Methoden zu Nitroxyl oxidiert;

- Das organische Pigment wird mit einer polymeren Verbindung enthaltend Reste der Formel I, worin R $C_1$-$C_{12}$-Alkoxy bedeutet, vermischt oder beschichtet, dann wird die Aminoethergruppe durch thermische Behandlung zu Nitroxyl gespaltet;

- Das organische Pigment wird mit einer polymeren Verbindung vermischt oder beschichtet, die eine reaktive Seitengruppe enthält und das erhaltene Produkt wird anschliessend mit einer reaktiven Nitroxylverbindung umgesetzt;

- Vorzugsweise werden allerdings das Pigment und die polymere Nitroxylverbindung entweder vorgemischt oder getrennt im gewünschten Mengenverhältnis in das zu pigmentierende Substrat nach üblichen Methoden eingearbeitet;

Die erfindungsgemässen Pigmentzusammensetzungen eignen sich ausgezeichnet als Pigmente zum Färben von hochmolekularem organischem Material, insbesondere, wenn hohe Anforderungen an die Licht- und Wetterbeständigkeit gestellt werden.

Hochmolekulare organische Materialien, die mit den erfindungsgemässen Pigmentzusammensetzungen pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Die erwähnten hochmolekularen organischen Materialien können einzeln oder in Gemischen als plastische Massen, Schmelzen oder in Form von Spinnlösungen, Lacken, Anstrichstoffen oder Druckfarben vorliegen.

Besonders geeignet sind die erfindungsgemässen Pigmentzusammensetzungen zum Einfärben von Polyvinylchlorid und Polyolefinen, wie Polyethylen und Polypropylen, sowie zum Pigmentieren von Lacken, Anstrichstoffen und Druckfarben. Dank ihrer hohen Lichtbeständigkeit eignen sie sich aber auch sehr gut für den Einsatz in elektrophotographischen Materialien (z.B. Photozellen), Farbfiltern (z.B. Flüssigkristallanzeigen), Informationsspeicherungsmaterialien ("optical disc"), nicht linearer Optik und in optischen Begrenzern ("optical limiters").

Die erfindungsgemässen Pigmentzusammensetzungen eignen sich aber vorzugsweise zum Färben von wässrigen und/oder lösungsmittelhaltigen Lacken, insbesondere Automobillacken. Ganz besonders bevorzugt ist ihre Verwendung für Effektlackierungen, bei denen transparente organische Pigmente eingesetzt werden.

Die erwähnten hochmolekularen organischen Materialien können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Pigmentzusammensetzungen als Toner oder in Form von Präparaten einzusetzen.

Bezogen auf das zu pigmentierende hochmolekulare organische Material kann man die erfindungsgemässen Pigmentzusammmensetzungen in einer Menge von 0,01 bis 40 Gew.%, vorzugsweise von 0,1 bis 10 Gew.%, einsetzen.

Die Pigmentierung der hochmolekularen organischen Substanzen mit den erfindungsgemässen Pigmentzusammensetzungen erfolgt beispielsweise derart, dass man eine solche Pigmentzusammensetzung gegebenenfalls in Form von Masterbatches, oder die einzelnen Komponenten diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Pigmentzusammensetzungen in die Polymeren eingearbeitet werden. Zwecks Erzielung verschiedener Farbtöne ist es ferner möglich, den hochmolekularen organischen Stoffen neben den erfindungsgemässen

Pigmentzusammensetzungen noch Füllstoffe beziehungsweise andere farbgebende Bestandteile, wie Weiss-, Bunt- oder Schwarzpigmente, in beliegigen Mengen zuzufügen.

Die erfindungsgemässen Pigmentzusammensetzungen können in den verschiedenen hochmolekularen organischen Materialien zusammen mit den jeweils üblichen Additiven eingesetzt werden.

Zum Pigmentieren von Lacken, Anstrichstoffen und Druckfarben werden die hochmolekularen organischen Materialien und die erfindungsgemässen Pigmentzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert beziehungsweise gelöst. Man kann dabei so verfahren, dass man die einzelnen Komponenten für sich oder auch mehrere gemeinsam dispergiert beziehungsweise löst, und erst hierauf alle Komponenten zusammenbringt.

In Färbungen, beispielsweise von Lacken, Polyvinylchlorid oder Polyolefinen, zeichnen sich die erfindungsgemässen Pigmentzusammensetzungen durch gute allgemeine Pigmenteigenschaften, wie gute Dispergierbarkeit, hohe Farbstärke und Reinheit, gute Migrations-, Hitze- und insbesondere Licht- und Wetterbeständigkeit aus.

Die nachfolgenden Beispiele erläutern die Erfindung.

Beispiel 1: 0,08 g einer polymeren Nitroxylverbindung mit der wiederkehrenden Einheit der Formel

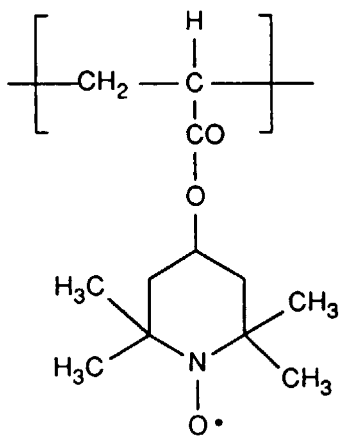

,

hergestellt wie in F. Karrer, Makromol. Chem. (1980), S. 597 beschrieben, mit einem mittleren Molekulargewicht $M_w$ = 6791 werden in 20 ml Ethanol gelöst. 8 g einer 10 Gew.-%igen wässrigen Dispersion des Pigments der Formel

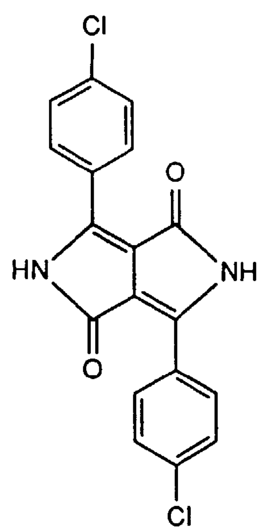

werden zugegeben. Nach 12 Stunden Rühren werden 70 ml Wasser zugegeben, die Suspension wird filtriert und der Rückstand im Trockenschrank getrocknet.

Das erhaltene stabilisierte Pigment wird wie folgt in einem Alkyd-Melamin-Einbrennlack eingearbeitet.

0,4 g Pigment/Nitroxyl-Gemisch, 7,6 g $TiO_2$, 9 ml Methylisobutylketon und 30 g Einbrennlack bestehend aus 66,5 Teilen Alkydharz ®ALKYDAL F27 (Bayer AG), 24,4 Teilen Melaminharz ®MAPRENAL TTK (Hoechst AG), 2,1 Teilen Xylol, 4,0 Teilen Ethylenglykol und 1,0 Teil Silikonöl (1 %ig in Xylol) werden nach üblichen Methoden vermischt. Der erhaltene Farblack wird auf Aluminiumbleche ausgezogen und 30 Minuten bei 130°C eingebrannt.

Eine Kontroll-Lackausfärbung wird ebenfalls in der gleichen Weise hergestellt, mit der Ausnahme, dass das Pigment ohne Zusatz von Nitroxylverbindung eingesetzt wird.

Die Wetterbeständigkeit der erhaltenen Lackausfärbungen wird gemäss WOM-Test nach DIN 53387 nach 500 Stunden Bewitterung bestimmt.

Der Lack mit dem Pigment/Nitroxyl-Gemisch zeigt eine deutlich bessere Wetterbeständigkeit als der Kontroll-Lack.

Beispiel 2: Es wird wie in Beispiel 1 verfahren, mit der einzigen Ausnahme, dass eine Nitroxylverbindung mit gleicher wiederkehrenden Einheit, jedoch mit einem mittleren Molekulargewicht $M_w$ = 6064 verwendet wird.

Auch dieser Lack zeigt eine ähnlich verbesserte Wetterbeständigkeit, wie in Beispiel 1.

Beispiel 3: Es wird wie in Beispiel 1 verfahren, mit der einzigen Ausnahme, dass eine Nitroxylverbindung mit gleicher wiederkehrenden Einheit, jedoch mit einem mittleren Molekulargewicht $M_w$ = 7799 verwendet wird.

Auch dieser Lack zeigt eine ähnlich verbesserte Wetterbeständigkeit, wie in Beispiel 1.

Beispiel 4: 0,08 g einer polymeren Nitroxylverbindung mit der wiederkehrenden Einheit der Formel

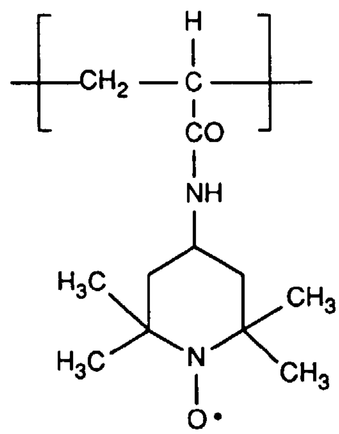

hergestellt wie in T. Osa et al., Chem. Letters (1988), S. 1423-1426 beschrieben, werden in 20 ml einer Mischung Ethanol/Wasser (8:2) bei pH 10 (Borax-Puffer) gelöst. 8 g einer 10 Gew.%igen wässrigen Dispersion des gleichen Pigments, wie in Beispiel 1, werden zugegeben. Nach 48 Std. Rühren wird die Suspension filtriert und der Rückstand im Trockenschrank getrocknet.

Das erhaltene stabilisierte Pigment wird in der gleichen Weise in demselben Alkyd-Melamin-Einbrennlack (Weissverschnitt), wie in Beispiel 1 eingearbeitet.

Die Wetterbeständigkeit der erhaltenen Lackausfärbung zeigt eine ähnliche Verbesserung wie in Beispiel 1.

Beispiel 5: 0,08 g einer polymeren Nitroxylverbindung mit der wiederkehrenden Einheit der Formel

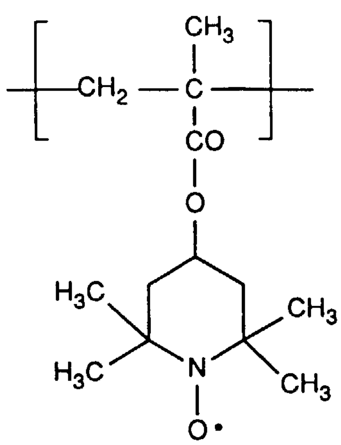

hergestellt wie in K.W. Lee et al, Journal of Polymeric Science, 10, 3295-3310 (1972) oder 12, 1407-1420 (1974) beschrieben, werden in 20 ml Tetrahydrofuran gelöst. 7,2 g einer 10 Gew.%igen wässrigen Suspension des gleichen Pigments, wie in Beispiel 1, werden zugegeben. Nach 12 Stunden Rühren werden 25 ml Wasser zugegeben, die Suspension wird filtriert und der Rückstand im Trockenschrank getrocknet. Wie in Beispiel 1 beschrieben in einem Alkyd-Melamin-Einbrennlack eingearbeitet, ergibt das Produkt ähnliche Wetterbeständigkeitswerte wie das Produkt von Beispiel 1.

Beispiel 6: 0,06 g der in Beispiel 1 verwendeten polymeren Nitroxylverbindung werden in 10 ml Dichlorethan und 25 ml Xylol gelöst. Diese Lösung wird zu 0,6 g des in Beispiel 1 verwendeten Pigments in eine Flasche mit 135 g Zirkonkugeln mit durchschnittlichem Ø 1,6-2,5 mm zugegeben. Die Flasche wird zur Dispergierung des Inhaltes 16 Stunden auf einer Rollbank gedreht. Die Suspension wird von den Zirkonkugeln getrennt, filtriert und im Trockenschrank getrocknet. Wie in Beispiel 1 beschrieben in einem Alkyd-Melamin-Einbrennlack eingearbeitet, ergibt das Produkt ähnliche Wetterbeständigkeitswerte wie das Produkt von Beispiel 1.

Beispiel 7: Es wird wie in Beispiel 6 verfahren, mit der einzigen Ausnahme, dass eine Nitroxylverbindung mit gleicher wiederkehrenden Einheit, jedoch mit einem mittleren Molekulargewicht $M_w$ = 6064 verwendet wird.

Auch dieser Lack zeigt eine ähnlich verbesserte Wetterbeständigkeit, wie in Beispiel 6.

Beispiel 8: Es wird wie in Beispiel 6 verfahren, mit der einzigen Ausnahme, dass eine Nitroxylverbindung mit gleicher wiederkehrenden Einheit, jedoch mit einem mittleren Molekulargewicht $M_w$ = 7799 verwendet wird.

Auch dieser Lack zeigt eine ähnlich verbesserte Wetterbeständigkeit, wie in Beispiel 6.

Beispiel 9: 0,150 g einer polymeren Nitroxylverbindung mit der wiederkehrenden Einheit der Formel

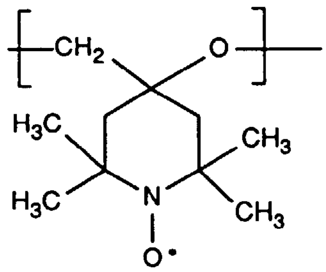

hergestellt durch Polymerisation der Verbindung der Formel

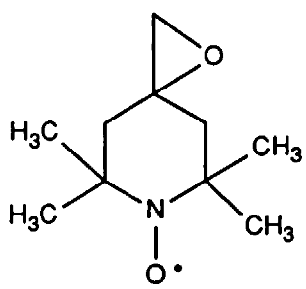

in Anlehnung an die in Beispiel 1 des US-Patents 4 413 075 beschriebenen Methode, und 1,35 g des gleichen Pigments, wie in Beispiel 1, werden in 25 ml Methylenchlorid durch Behandlung mit Ultraschall 5 Minuten suspendiert. Dann wird das Lösungsmittel abdestilliert und der Rückstand wird getrocknet. Wie in Beispiel 1 beschrieben in einem Alkyd-Melamin-Einbrennlack eingearbeitet, ergibt das Produkt ebenfalls eine verbesserte Wetterbeständigkeit.

Beispiel 10: 0,5 g 4-Methacryloyloxy-1-hydroxy-2,2,6,6-tetramethylpiperidin-hydrochlorid werden nach der von L. Kurosaki in Journal of Polymeric Science, 12, 1407-1420 (1974) beschriebenen Methode polymerisiert. Der erhaltenen Lösung des Polymeren mit wiederkehrenden Einheiten der Formel

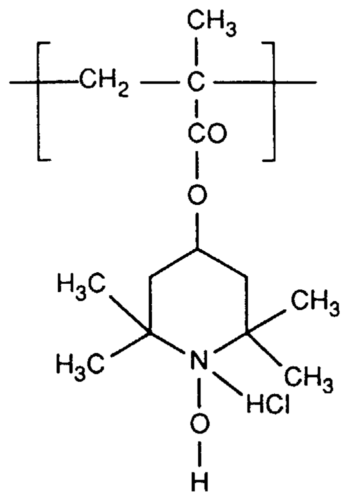

werden 10 g einer 10 Gew.%igen wässrigen Dispersion des gleichen Pigments, wie in Beispiel 1, zugegeben. Die Suspension wird zwei Stunden gerührt, dann filtriert und der Rückstand wird im Trockenschrank getrocknet.

Das erhaltene stabilisierte Pigment wird wie in Beispiel 1 beschrieben in einem Alkyd-Melamin-Einbrennlack eingearbeitet.

Der Lack zeigt eine ähnlich verbesserte Wetterbeständigkeit, wie in Beispiel 1.

Beispiel 11: Beispiel 10 wird wiederholt, mit der einzigen Ausnahme, dass der pH vor dem Filtrieren mit 30 Gew. %igem wässrigem NaOH auf 7-8 gestellt wird.

Beispiel 12: 0,2 g des in Beispiel 8 beschriebenen Polymeren werden in 100 ml Wasser und 5 ml Eisessig gelöst. Dieser Lösung werden 10 g einer 10 Gew.%igen wässrigen Dispersion des gleichen Pigments, wie in Beispiel 1, zugegeben. Die Suspension wird zwei Stunden gerührt, mit 30 Gew.%igem wässrigem NaOH wird der pH auf 7-8 gestellt, dann wird die Suspension filtriert und der Rückstand getrocknet.

Das erhaltene stabilisierte Pigment wird wie in Beispiel 1 beschrieben in einem Alkyd-Melamin-Einbrennlack eingearbeitet.

Der Lack zeigt eine ähnlich verbesserte Wetterbeständigkeit, wie in Beispiel 1.

Beispiel 13: Beispiel 1 wird wiederholt, mit der einzigen Ausnahme, dass anstelle des dort beschriebenen Polymeren ein Copolymere aus Methylmethacrylat und 4-Methacryloyloxy-2,2,6,6-tetramethylpiperidin-1-oxyl, d.h. mit wiederkehrenden Einheiten der Formeln

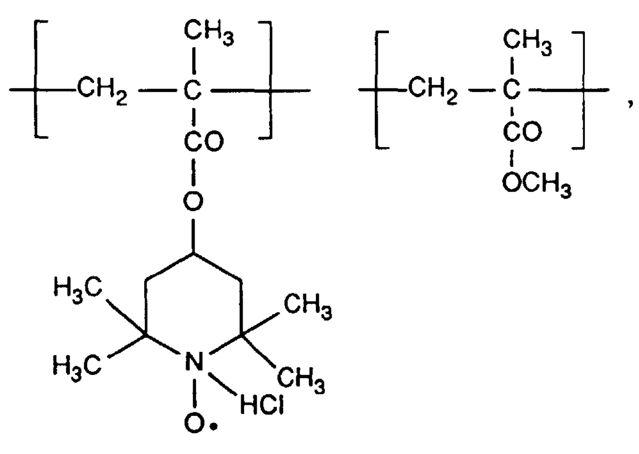

welches nach der von Lau et al. in Journal of Polymer Science (Part A: Polymer Chemistry), 30, 983-988, beschriebenen Methode erhalten wird, eingesetzt wird.

Der mit dem so stabilisierten Pigment, wie in Beispiel 1 beschrieben erhaltene Lack, zeigt eine ähnliche verbesserte Wetterbeständigkeit, wie in Beispiel 1.

Beispiel 14: Beispiel 1 wird wiederholt mit der einzigen Ausnahme, dass anstelle des dort verwendeten Polymeren

das Copolymere Poly-[N-(1-oxyl-2,2,6,6-tetramethyl-4-piperidyl)-maleinsäureamid-co-styrol mit der wiederkehrenden Einheit der Formel

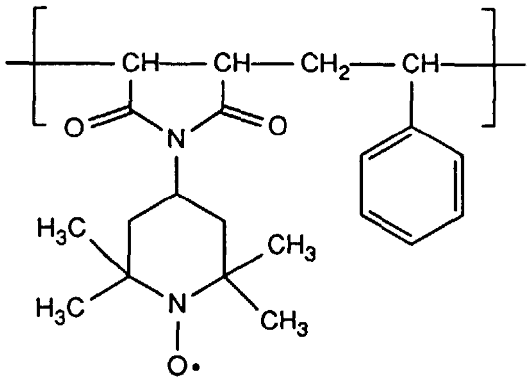

wie er von R. Seidemann et al. in Makromol. Chem. 190, 980 (1989) beschrieben ist, eingesetzt wird.

Der mit dem so stabilisierten Pigment, wie in Beispiel 1 beschrieben erhaltene Lack, zeigt eine ähnliche verbesserte Wetterbeständigkeit, wie in Beispiel 1.

Beispiel 15: Beispiel 1 wird wiederholt mit der einzigen Ausnahme, dass anstelle des dort verwendeten Polymeren ein Polymere mit der wiederkehrenden Einheit der Formel

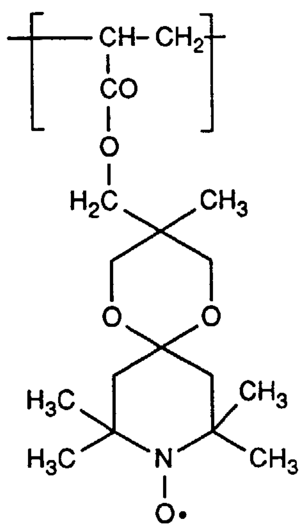

gemäss der Beschreibung von P. Strohriegel in Makromol. Chem. Rapid Commun. 13, 125-133 (1992), eingesetzt wird.

Der mit dem so stabilisierten Pigment, wie in Beispiel 1 beschrieben erhaltene Lack, zeigt eine ähnliche verbesserte Wetterbeständigkeit, wie in Beispiel 1.

Beispiel 16: Beispiel 15 wird wiederholt mit einem Polymeren mit der wiederkehrenden Einheit der Formel

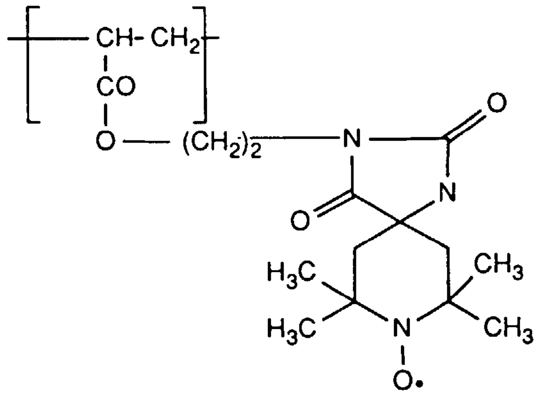

erhalten in Anlehnung an die in Beispiel 15 angegebene Methode von P. Strohriegel mit dem entsprechenden Hydantoinderivat.

Der mit dem so stabilisierten Pigment, wie in Beispiel 1 beschrieben erhaltene Lack, zeigt eine ähnliche verbesserte Wetterbeständigkeit, wie in Beispiel 1.

Beispiel 17: 0,4 g des Pigments der Formel

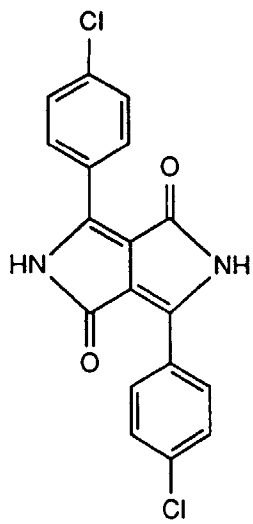

und 0,04 g des in Beispiel 1 beschriebenen Polymeren werden getrennt, aber sonst wie in Beispiel 1 beschrieben in demselben Alkyd-Melamin-Einbrennlack (Weissverschnitt) eingearbeitet.

Der so erhaltene Lack, zeigt eine ähnliche verbesserte Wetterbeständigkeit, wie in Beispiel 1.

Ersetzt man in diesem Beispiel das Polymere jeweils mit einem der in den Beispielen 2 bis 16 beschriebenen Polymeren, so erhält man bezüglich Wetterbeständigkeit dieselben Resultate.

Beispiele 18-30: Verfährt man wie in Beispiel 8, ersetzt man aber das dort eingesetzte Pigment jeweils mit einem der folgenden Pigmente, so zeigen die mit den erhaltenen Pigmentzusammensetzungen gemäss der in Beispiel 1 angegebenen Methode hergestellten Lacke eine ähnliche verbesserte Wetterbeständigkeit, wie in Beispiel 1.

| Beispiel | Pigment |
|---|---|
| 18 | 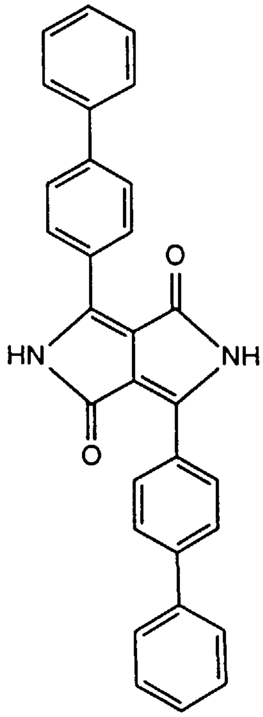 |

| | |
|---|---|
| 19 | 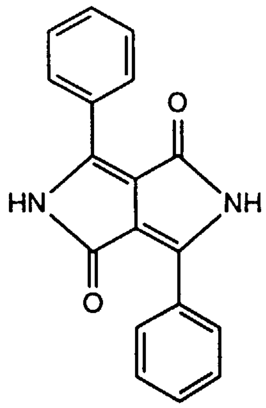 |
| 20 | 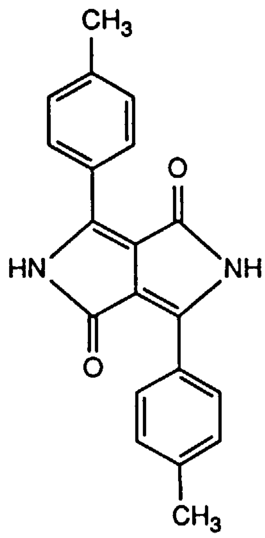 |
| 21 | 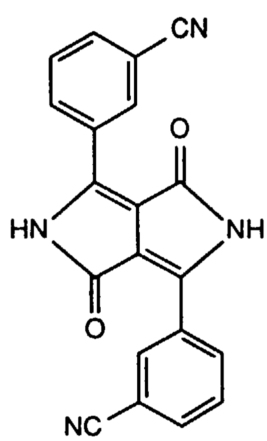 |
| 22 | C.I. Pigment Gelb 17 |
| 23 | C.I. Pigment Gelb 62 |

| | |
|---|---|
| 24 | C.I. Pigment Gelb 95 |
| 25 | C.I. Pigment Gelb 110 |
| 26 | C.I. Pigment Gelb 188 |
| 27 | C.I. Pigment Orange 34 |
| 28 | C.I. Pigment Rot 170 |
| 29 | C.I. Pigment Rot 177 |
| 30 | C.I. Pigment Blau 15:4 |

Die Klassenzugehörigkeit der in den Beispielen 22-30 verwendeten Pigmente ist in der nachfolgenden Tabelle festgehalten:

| C.I. Bezeichnung | Pigmentklasse |
|---|---|
| C.I. Pigment Gelb 17 | Bisazopigment |
| C.I. Pigment Gelb 62 | Verlaktes Monoazopigment |
| C.I. Pigment Gelb 95 | Bisazopigment |
| C.I. Pigment Gelb 110 | Isoindolinonpigment |
| C.I. Pigment Gelb 188 | Bisazopigment |
| C.I. Pigment Orange 34 | Bisazopigment |
| C.I. Pigment Rot 170 | Monoazopigment |
| C.I. Pigment Rot 177 | Anthrachinonpigment |
| C.I. Pigment Blau 15:4 | Kupferphthalocyaninpigment |

Beispiel 31: Verfährt man wie in Beispiel 17 beschrieben mit 0,4 g des in Beispiel 18 beschriebenen Pigments und 0,04 g des in Beispiel 8 beschriebenen Polymeren so erhält man bezüglich Wetterbeständigkeit ähnliche Resultate. Dasselbe ebenfalls, wenn man das Pigment des Beispiels 18 jeweils mit einem der in den Beispielen 19-30 beschriebenen Pigmente ersetzt.

Beispiel 32

Lösung A

| Formulierung: | |
|---|---|
| 67,1 Teile A1 | 8,2 %ige Lösung von 86 Teilen Celluloseacetobutyrat (25%ig in Butylacetat), 4 Teilen Zirkoniumoctoat, 48 Teilen SOLVESSO 150® (aromatisches Lösungsmittel von ESSO), 70 Teilen Butylacetat und 52 Teilen Xylol; |
| 24,8 Teile A2 | Polyesterharz DYNAPOL H 700® (60%ig, von Dynamit Nobel); |
| 3,1 Teile A3 | Melaminharz MAPRENAL MF 650® (55%ig, von Hoechst AG). |

Dispersion B

| Formulierung: | |
|---|---|
| 12,3 Teile | Alu-Paste Silverline 3334® (Silverline); |
| 8,0 Teile | SOLVESSO 150®; |
| 59,34 Teile | A1; |
| 21,92 Teile | A2; |
| 2,74 Teile | A3. |

Eine 1:1 Mischung aus a) einer nach üblichen Methoden erhaltenen Dispersion von 5 Teilen des stabilisierten Pigments gemäss Beispiel 8 in Lösung A und b) der Dispersion B wird mit der Spritzpistole appliziert.
Nach kurzem Ablüften wird ein Klarlack auf Basis eines hitzehärtbaren Acryllacks appliziert und bei 130°C während 30 Minuten eingebrannt. Man erhält eine rote Metalleffektlackierung.

Eine Kontroll-Lackausfärbung wird in der gleichen Weise hergestellt, mit der Ausnahme, dass das Pigment ohne Zusatz von polymeren Nitroxylverbindungen eingesetzt wird.

Die Wetterbeständigkeit der erhaltenen Lackausfärbungen wird gemäss WOM-Test nach 250 bis 2000 Stunden Bewitterung bestimmt.

Die mit der erfindungsgemässen Pigmentzusammensetzung erhaltene Lackausfärbung ergibt eine bessere Wetterbeständigkeit, als diejenige der Kontroll-Lackausfärbung.

Beispiel 33: 0,5 g stabilisiertes Pigment gemäss Beispiel 8 und 16,2 g einer Nitrocellulosedruckfarbe bestehend aus 11 g Nitrocellulose A 250, 9 g DOWANOL PM® (Dow Chem.), 20 g Essigsäureethylester und 60 g Ethanol werden nach üblichen Methoden vermischt. Die erhaltene Druckfarbe wird auf Papier ausgezogen. Die Lichtbeständigkeit wird gemäss Fadeometer-Test nach 500 Stunden Belichtung bestimmt.

Die mit der erfindungsgemässen Pigmentzusammensetzung erhaltene Ausfärbung zeigt eine bessere Lichtechtheit, als die entsprechende Kontrolle, die in der gleichen Weise erhalten wird, jedoch ohne Zugabe der polymeren Nitroxylverbindung.

Beispiel 34: 0,7 g des stabilisierten Pigments gemäss Beispiel 8 wird mit 700 g Polyethylen VESTOLEN A 6016® (Hüls) und 1,4 g Calciumcarbonat MILICARB® trocken vermischt. Die Mischung wird anschliessend in einem Einschneckenextruder zweimal bei 200°C extrudiert. Das so erhaltene Granulat wird auf einer Spritzgussmaschine bei 200°C zu Plättchen verarbeitet. Die Wetterbeständigkeit wird durch Bewitterung der Plättchen, wie in Beispiel 1 für die Lack-Ausfärbungen beschrieben, bestimmt. Auch in diesem Fall erhält man eine bessere Wetterbeständigkeit, als bei der entsprechenden Kontroll-Ausfärbung ohne Nitroxylverbindung.

**Patentansprüche**

**1.** Lichtstabilisierte Pigmentzusammensetzungen enthaltend

a) mindestens ein organisches Pigment ausgewählt aus der Gruppe bestehend aus Diketopyrrolopyrrole, Azopigmente, Chinacridone, Chinophthalone, Phthalocyanine, Indanthrone, Flavanthrone, Pyranthrone, Anthrachinone, Perylene, Dioxazine, Perinone, Thioindigo, Isoindoline, Isoindolinone und Metallkomplexe und

b) 0,01 bis 100 Gew.%, bezogen auf das Pigment, eines Kondensations- oder Additionspolymeren, dessen wiederkehrende Moleküleinheit mindestens einen eine Nitroxyl- oder Hydroxylaminogruppe enthaltenden Rest enthält oder durch eine eine Nitroxyl- oder Hydroxylaminogruppe enthaltende Seitengruppe substituiert ist, sowie dessen Mischpolymere untereinander oder mit Nitroxyl- oder Hydroxylamin-freien Komponenten.

**2.** Pigmentzusammensetzungen gemäss Anspruch 1, dadurch gekennzeichnet, dass ein Pigment der Isoindolin-, Isoindolinon-, Metallkomplex- und insbesondere der Diketopyrrolopyrrol-, Azo-, Chinacridon-, Phthalocyanin-, Anthrachinon- und Perylenreihe verwendet wird.

**3.** Pigmentzusammensetzungen gemäss Anspruch 1, dadurch gekennzeichnet, dass ein Diketopyrrolopyrrol-Pigment bevorzugt in feiner Form mit einer durchschnittlichen Partikelgrösse von 0,005 bis 0,1 µm verwendet wird.

**4.** Pigmentzusammensetzungen gemäss Anspruch 1, dadurch gekennzeichnet, dass die polymere Nitroxylverbindung in einer Menge von 0,1-10 Gew.%, bezogen auf das Pigment, eingesetzt wird.

5. Pigmentzusammensetzungen gemäss Anspruch 1, dadurch gekennzeichnet, dass ein organisches oder anorganisches Salz der Nitroxylverbindung verwendet wird.

6. Pigmentzusammensetzungen gemäss Anspruch 1, dadurch gekennzeichnet, dass polymere Nitroxylverbindungen verwendet werden deren wiederkehrende Moleküleinheit mindestens einen Rest der Formel

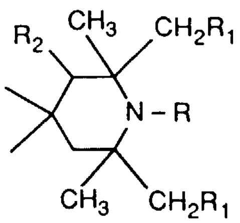

(I)

enthält oder mindestens einmal direkt oder indirekt durch eine der Seitengruppen der Formeln

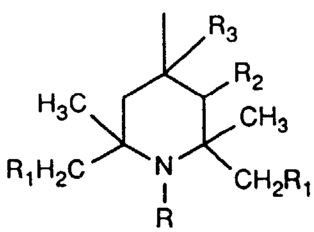

,

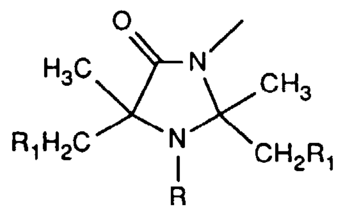

,

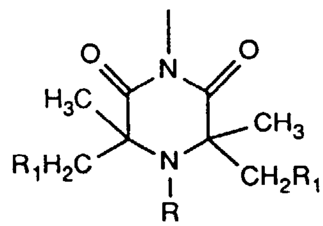

(II) (III) (IV)

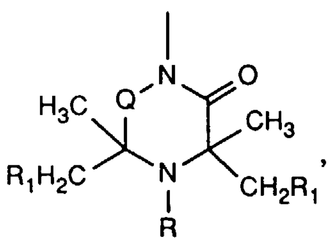

,

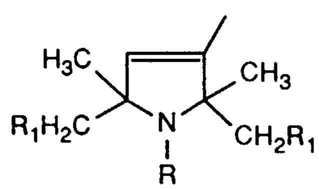

oder

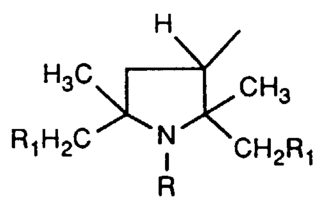

(V) (VI) (VII)

substituiert ist, worin R O· oder OH, $R_1$ Wasserstoff oder $C_1$-$C_4$-Alkyl, $R_2$ Wasserstoff oder $C_1$-$C_4$-Alkyl, $R_3$ Wasserstoff oder eine freie Valenz und Q $-CH_2-$, $-(CH_2)_2-$ oder $-CH_2-CH(CH_3)-$ bedeuten, sowie Mischpolymere untereinander oder mit Nitroxyl- und Hydroxylamin-freien Komponenten.

7. Pigmentzusammensetzungen gemäss Anspruch 6, dadurch gekennzeichnet, dass in den Formeln I-VII R O· bedeutet.

8. Pigmentzusammensetzungen gemäss Anspruch 6, dadurch gekennzeichnet, dass polymere Nitroxylverbindungen verwendet werden, deren wiederkehrende Moleküleinheit mindestens einen Rest der Formel

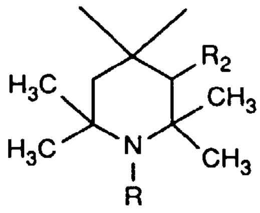

(VIII)

enthält oder mindestens einmal direkt oder indirekt durch eine Seitengruppe der Formel

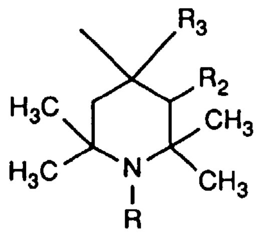

(IX)

substituiert ist, worin R, $R_2$ und $R_3$ die in Anspruch 6 angegebene Bedeutung haben.

**9.** Pigmentzusammensetzungen gemäss Anspruch 8, dadurch gekennzeichnet, dass polymere Nitroxylverbindungen verwendet werden, deren wiederkehrende Moleküleinheit mindestens einen Rest der Formel

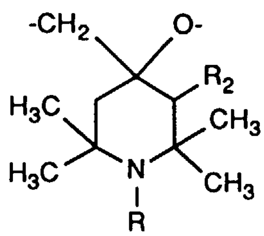

(X) oder

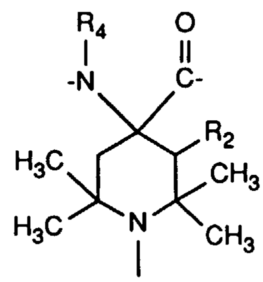

(XI)

enthält oder mindestens einmal durch eine Seitengruppe der Formel

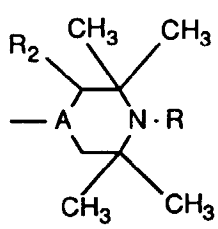

(XII)

substituiert ist,
worin A eine Gruppe der Formel

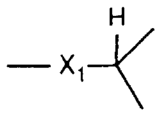 (XIII) , 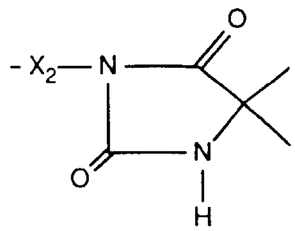 (XIV)

oder

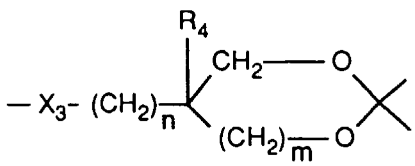 (XV)

ist, R und $R_2$ die in Anspruch 8 angegebene Bedeutung haben, $R_4$ Wasserstoff, Methyl oder Ethyl bedeutet, m Null oder 1 ist, n, wenn m Null ist, 1 und wenn m 1 ist Null oder 1 bedeutet,

$X_1$ eine direkte Bindung, -O- oder eine Gruppe der Formel
$-CO-O-$, $-CO-NR_5-$,

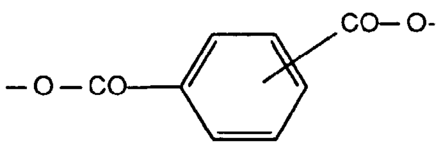 , 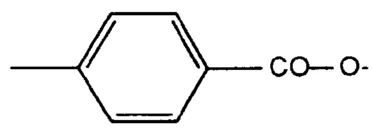

$-CH_2-O-$, $NR_5-$, $-O-CH_2CH_2-NH-$, $-NH-CH_2CH_2-O-$, $-CO-NR_5-(CH_2)_p-CO-NH-$,

$-NH-(CH_2)_p-$ 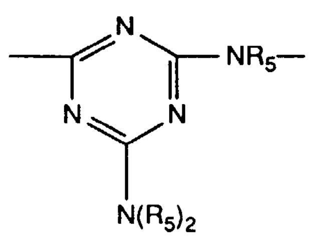 ,

$-(CH_2)_p-CO-O-$
bedeutet, worin $R_5$ Wasserstoff, $C_1$-$C_{12}$-Alkyl, $C_5$-$C_7$-Cycloalkyl oder $C_7$-$C_{11}$-Aralkyl und p eine Zahl zwischen 1 und 6 bedeuten,

$X_2$ eine direkte Bindung oder eine Gruppe der Formel $-(CH_2)_p-$, $-CO-O-CHR_5-CH_2-$ oder $-CO-NR_4-CHR_5-CH_2-$ ist, worin $R_4$, $R_5$ und p die oben angegebene Bedeutung haben, und

$X_3$ eine direkte Bindung, -O-, oder eine Gruppe der Formel $-CO-O-$, $-O-CH_2-O-$ oder $-(CH_2)_p-$ bedeutet, worin p die oben angegebene Bedeutung hat.

**10.** Pigmentzusammensetzungen gemäss Anspruch 1, dadurch gekennzeichnet, dass Polymere mit einer wiederkehrenden Einheit der Formel

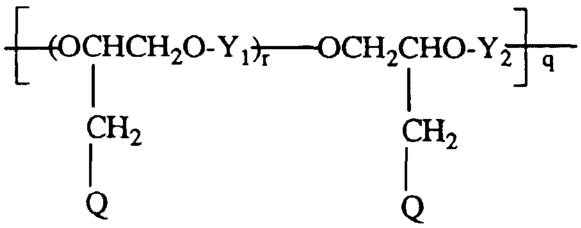 (XVI),

worin Q einen Rest der Formel XII ist, in welchem A eine Gruppe -O-CH<, -$NR_5$-CH<

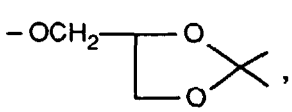 , 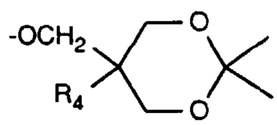 oder 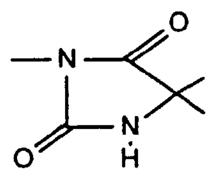

bedeutet,

R, $R_2$, $R_4$ und $R_5$ die in Anspruch 9 angegebene Bedeutung haben,
q eine Zahl zwischen 10 und 50 und r Null oder 1 sind, und
wenn r Null ist,
$Y_2$ eine aliphatische, aromatische, araliphatische oder alicyclische Diacylgruppe mit bis zu 20 Kohlenstoffatomen ist,
wenn r 1 ist und Q einen Rest der Formel XII bedeutet, worin A -O-CH<,

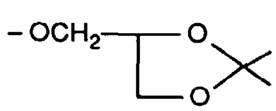 , oder 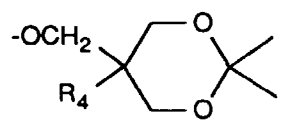

ist,
$Y_1$ eine gesättigte, aliphatische Diacylgruppe mit bis zu 20 Kohlenstoffatomen, eine Benzoldicarbonylgruppe, eine Cyclohexandicarbonylgruppe, eine Gruppe

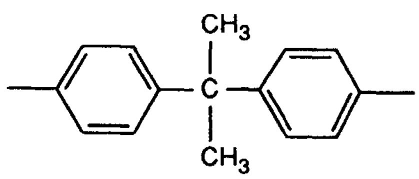 oder 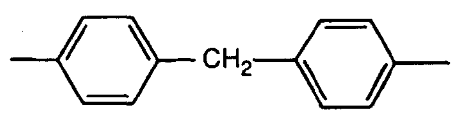

bedeutet, und,
wenn r 1 ist und Q einen Rest der Formel XII bedeutet, worin A -$NR_5$-CH< oder

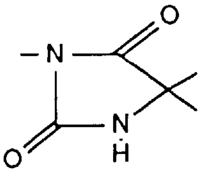

ist,

$Y_1$ eine gesättigte aliphatische Diacylgruppe mit bis zu 20 Kohlenstoffatomen, eine Benzoldicarbonylgruppe, eine Cyclohexandicarbonylgruppe, eine Gruppe

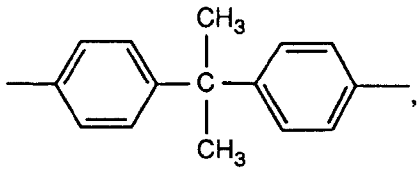

,

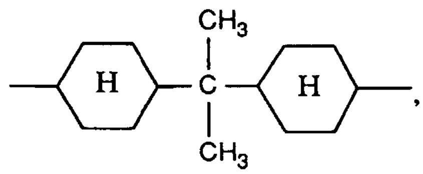

,

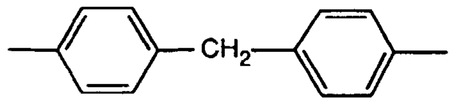

oder

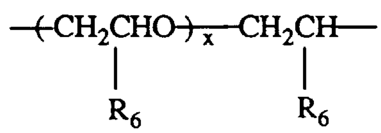

bedeutet, worin x Null oder eine Zahl von 1 bis 8 ist und $R_6$ Wasserstoff oder Methyl bedeutet, und $Y_2$, wenn r 1 ist, eine gesättigte aliphatische Diacylgruppe mit bis zu 20 Kohlenstoffatomen, eine Benzoldicarbonylgruppe, eine Cyclohexandicarbonylgruppe, eine Alkylengruppe mit 2 bis 10 Kohlenstoffatomen, eine Xylylengruppe, eine Gruppe

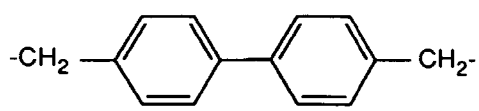

oder -CONH-$Y_3$-NHCO-,

worin $Y_3$ eine Alkylengruppe mit 2 bis 10 Kohlenstoffatomen oder eine unsubstituierte oder durch Methyl substituierte Phenylengruppe ist, verwendet werden.

**11.** Pigmentzusammensetzungen gemäss Anspruch 1, dadurch gekennzeichnet, dass Polymere mit einer wiederkehrenden Einheit der Formel

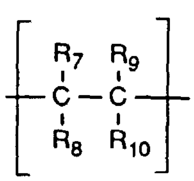

(XVII),

worin $R_7$ eine Gruppe der Formel

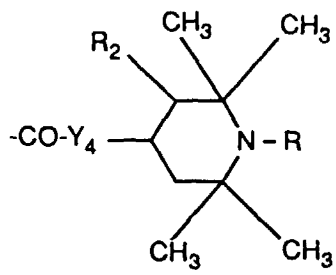 oder 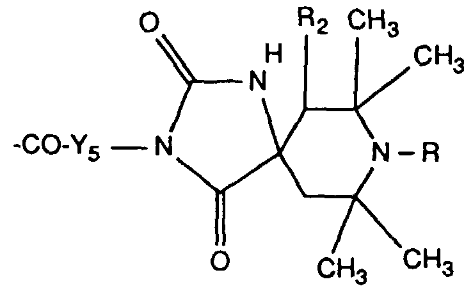 ,

worin R und $R_2$ die in Anspruch 9 angegebene Bedeutung haben, $Y_4$ -O- oder $-NR_5-$ ist, wobei $R_5$ die in Anspruch 9 angegebene Bedeutung hat, $Y_5$ eine Gruppe

$$-O\!-\!(\!-CH_2\text{-}CH_2-\!)_z- \quad \text{oder} \quad -NR_5\!-\!(\!-CH_2\text{-}CH_2-\!)_z-$$

bedeutet, worin z Null oder 1 bedeutet, $R_8$, $R_9$ und $R_{10}$ unabhängig voneinander Wasserstoff oder $C_1$-$C_4$-Alkyl, $R_9$ zusätzlich auch -COOH sind, und, wenn $R_8$ und $R_{10}$ Wasserstoff sind, $R_7$ und $R_9$ zusammen eine Gruppe der Formel

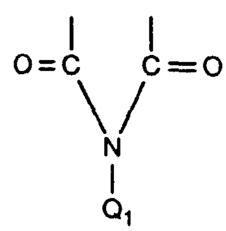

bilden, worin $Q_1$ eine Gruppe

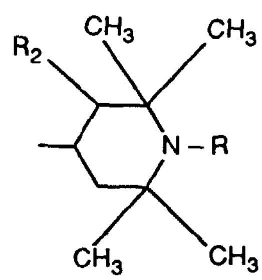

ist, in welcher R und $R_2$ die in Anspruch 9 angegebene Bedeutung haben, sowie Copolymere von XVII mit einer mindestens eine polymerisierbare Doppelbindung enthaltenden Verbindung, wobei mindestens eine wiederkehrende Einheit XVII auf 10 Co-Komponenten enthalten ist, verwendet werden.

**12.** Pigmentzusammensetzungen gemäss Anspruch 1, dadurch gekennzeichnet, dass Copolymere aus

1) mindestens einem ungesättigten Derivat der Formel

$$R_{12}\text{-}Y_6\text{-CO-CH=CH-CO-}Y_7\text{-}R_{13} \qquad (XVIII),$$

und

2) mindestens einem Comonomeren der Formel

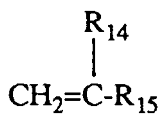

(XIX),

worin

$R_{12}$ eine Gruppe der Formel XII mit der in Anspruch 9 angegebenen Bedeutung und

$R_{13}$ Wasserstoff, $C_1$-$C_{12}$-Alkyl, welches durch -O- unterbrochen sein kann, $C_3$-$C_5$-Alkenyl, $C_7$-$C_{11}$-Aralkyl, $C_5$-$C_7$-Cycloalkyl oder gleich $R_{12}$ sind,

$Y_6$ und $Y_7$ unabhängig voneinander -O- oder $-NR_5$- bedeuten, wobei $R_5$ die in Anspruch 9 angegebene Bedeutung hat,

$R_{14}$ Wasserstoff oder Methyl ist,

$R_{15}$ Wasserstoff, $C_1$-$C_{12}$-Alkyl, Phenyl, Cl, CN, $C_1$-$C_4$-Alkoxy, $C_2$-$C_5$-Alkanoyloxy, $-CONH_2$, $-COOR_{16}$, $-OR_{16}$ oder $-CONR_{17}R_{18}$ bedeutet,

$R_{16}$ Wasserstoff, $C_1$-$C_{12}$-Alkyl, $C_2$-$C_4$-Hydroxyalkyl oder eine Gruppe der Formel XII mit der in Anspruch 9 angegebenen Bedeutung ist,

$R_{17}$ $C_1$-$C_{12}$-Alkyl, $C_5$-$C_7$-Cycloalkyl, Phenyl oder eine Gruppe $Q_2$ der Formel

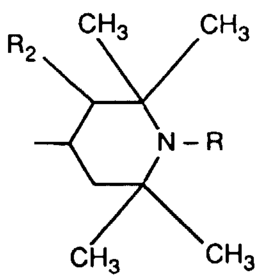

ist, worin R und $R_2$ die in Anspruch 9 angegebene Bedeutung haben,

$R_{18}$ Wasserstoff, $C_1$-$C_{12}$-Alkyl, $C_5$-$C_7$-Cycloalkyl oder $C_7$-$C_{11}$-Aralkyl ist oder

$R_{17}$ und $R_{18}$ zusammen mit dem N-Atom, an das sie gebunden sind, einen 5-7-gliedrigen heterocyclischen Ring ausgewählt aus Pyrrolidin, Piperidin, Morpholin oder 4-Alkylpiperazin bilden,

oder Copolymere aus

1) mindestens einem Maleinimid der Formel

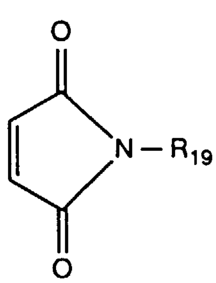

,

worin $R_{19}$ eine Gruppe $Q_2$ ist, und

2) mindestens einen Comonomer der Formel

$$CH_2=CH-R_{20},$$

worin $R_{20}$ Wasserstoff oder $C_1$-$C_{12}$-Alkyl ist,

verwendet werden.

**13.** Pigmentzusammensetzungen gemäss Anspruch 1, dadurch gekennzeichnet, dass Polymere mit einer wiederkehrenden Einheit der Formel

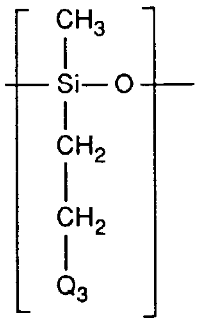

(XX),

worin $Q_3$ eine Gruppe der Formel

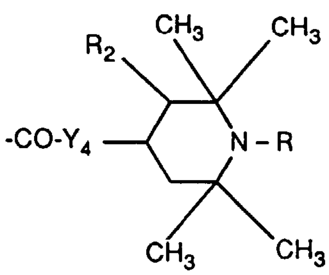

,

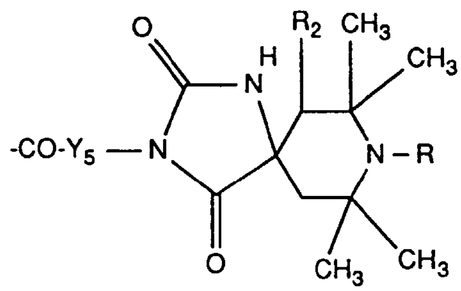

oder

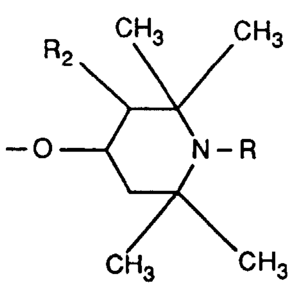

,

worin R und $R_2$ die in Anspruch 9 angegebene Bedeutung haben, $Y_4$ -O- oder -$NR_5$- ist, wobei $R_5$ die oben angegebene Bedeutung hat, $Y_5$ eine Gruppe

$$-O-\!\left(CH_2\text{-}CH_2\right)_z- \quad \text{oder} \quad -NR_5-\!\left(CH_2\text{-}CH_2\right)_z-$$

bedeutet, worin z Null oder 1 bedeutet, sowie Copolymere von XX mit einer mindestens eine polymerisierbare

Doppelbindung enthaltenden Verbindung, wobei mindestens eine wiederkehrende Einheit XX auf 10 Co-Komponenten enthalten ist,
verwendet werden.

**14.** Pigmentzusammensetzungen gemäss Anspruch 1, dadurch gekennzeichnet, dass Polymere erhalten durch Kondensation einer Verbindung der Formel

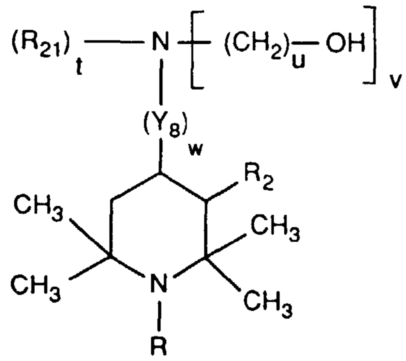

(XXI),

worin R und $R_2$ die in Anspruch 9 angegebene Bedeutung haben, $R_{21}$ Wasserstoff ist, $Y_8$ eine Gruppe $-(CH_2)_u-NH-$ bedeutet, u eine Zahl von 1-4, t Null oder 1, w Null oder 1 und v 1 oder 2 sind, mit der Bedingung, dass wenn v 2 ist t Null bedeutet,
mit einem Diisocyanat der Formel

$$O{=}C{=}N{-}Y_9{-}N{=}C{=}O \qquad (XXII),$$

worin $Y_9$ eine Gruppe $-(CH_2)q-$,

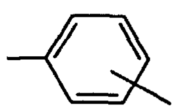 , 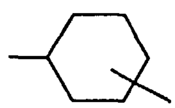 , 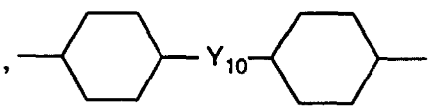 ,

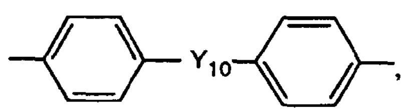 ,

worin $Y_{10}$ eine direkte Bindung, $-(CH_2)_b-$, $-NR_{22}-$, -O-, -S-, $-SO_2-$ bedeutet, a eine Zahl von 1 bis 10 und b eine Zahl von 1 bis 5 bedeuten und $R_{22}$ $C_1$-$C_4$-Alkyl ist, verwendet werden.

**15.** Pigmentzusammensetzungen gemäss Anspruch 1, dadurch gekennzeichnet, dass Polymere der Formel

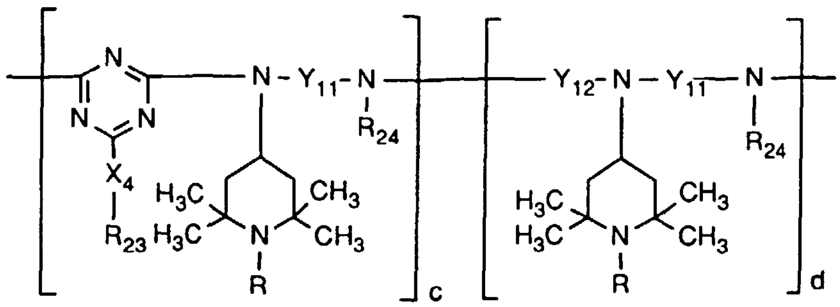

(XXIII),

worin R die in Anspruch 9 angegebene Bedeutung hat, $R_{23}$ Wasserstoff, $C_1$-$C_{12}$-Alkyl, durch -OH, $C_1$-$C_4$-Alkyl oder $C_2$-$C_8$-Dialkylamino substituiertes $C_2$-$C_{12}$-Alkyl, $C_3$-$C_5$-Alkenyl, $C_5$-$C_7$-Cycloalkyl, $C_6$-$C_{18}$-Aryl, $C_7$-$C_{11}$-Aralkyl oder eine Gruppe

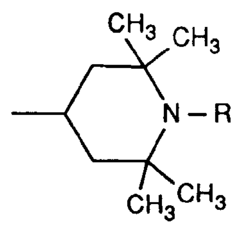

ist, $R_{24}$ $C_5$-$C_7$-Cycloalkyl, $C_6$-$C_{18}$-Aryl, $C_7$-$C_{11}$-Aralkyl oder eine Gruppe der Formel

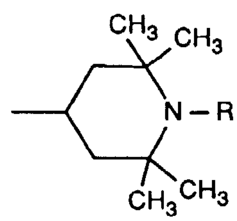

bedeutet, $X_4$ -O-, -S- oder -$NR_{25}$-, wobei $R_{25}$ die gleiche Bedeutung wie $R_{23}$ haben kann, $R_{23}$ $X_4$- als Einzelsubstituent betrachtet auch einen heterocyclischen Rest ausgewählt aus der Gruppe bestehend aus Pyrrolidin-1-yl, Piperidin-1-yl, Hexahydroazepin-1-yl, Morpholin4-yl oder Methylpiperazin-1-yl bedeuten kann, $Y_{11}$ $C_2$-$C_{10}$-Alkylen, durch 1 oder 2 Sauerstoff- oder -NH-Gruppen unterbrochenes $C_4$-$C_{10}$-Alkylen, Cyclohexan, Phenylen, eine Gruppe

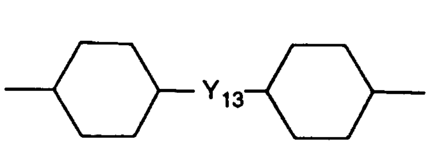

oder

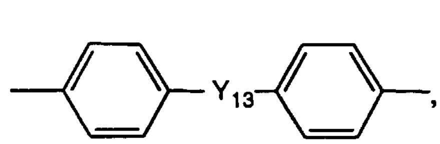

,

worin $Y_{13}$ eine direkte Bindung oder

$$-(CH_2)_{1-10}$$

ist , bedeutet, $Y_{12}$ $C_2$-$C_{10}$-Hydroxyalkylen, $C_4$-$C_8$-Alkenylen oder eine Gruppe -CO-, -OOC-$Y_{11}$-COO-, -COO-$Y_{11}$-OOC-, -OCNH-$Y_{11}$-NHCO-, -HNOC-$Y_{11}$-CONH- oder -OC-$Y_{11}$-CO- darstellt,

wobei das Verhältnis c:d zwischen 4:1 und 1:4 liegt, verwendet werden.

**16.** Pigmentzusammensetzungen gemäss Anspruch 1, dadurch gekennzeichnet, dass Polymere mit einer wiederkehrenden Einheit der Formel

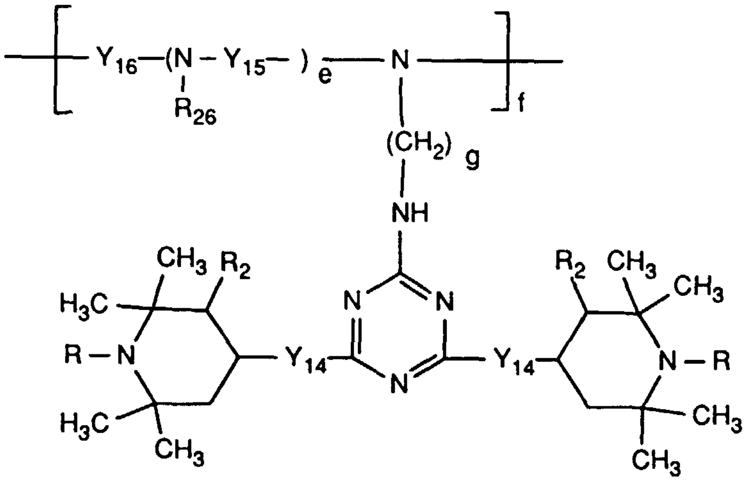

(XXIV),

worin R und $R_2$ die in Anspruch 9 angegebene Bedeutung haben,

$Y_{14}$ -O- oder $-NR_{18}-$, wobei $R_{18}$ $C_1$-$C_{12}$-Alkyl, $C_5$-$C_7$-Cycloalkyl oder $C_7$-$C_{11}$-Aralkyl ist, g eine Zahl von 2 bis 12 sein kann
$Y_{15}$ die Gruppe

$$-(CH_2)_g-,$$

in der g die oben angegebene Bedeutung hat, die Gruppe

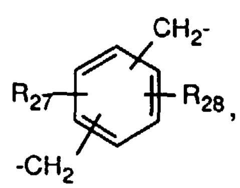

in der $R_{27}$ und $R_{28}$ unabhängig voneinander Wasserstoff oder Methyl sind,

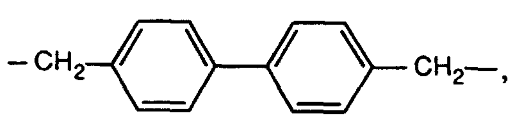 ,

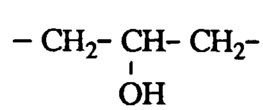 ,

$$-CH_2-CH_2-(OCH_2-CH_2)_h,$$

worin h 1 bis 3 sein kann,
$R_{26}$ Wasserstoff, $C_1$-$C_{12}$-Alkyl, eine Gruppe der Formel

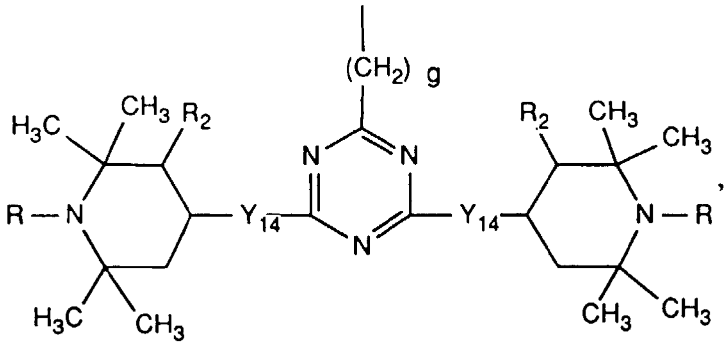

worin R, $R_2$, $Y_{14}$ die im Anspruch 9 und g die oben angegebene Bedeutung haben, oder eine Gruppe der Formel

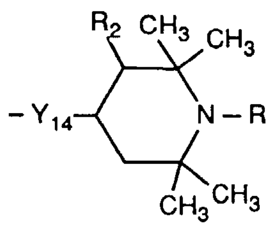

mit der oben angegebenen Bedeutung,
e Null oder 1 ist,
$Y_{16}$, wenn e Null ist, die Bedeutung von $Y_{15}$ oder eine Gruppe

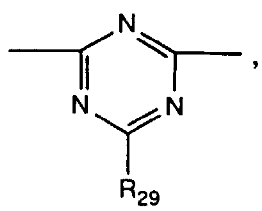

-OC-$Y_{17}$-CO-, -OCHN-$Y_{18}$-NHCO-, -COO-$Y_{19}$-OOC- oder -$CH_2$-$Y_{20}$-CO- bedeutet, worin $R_{29}$ Wasserstoff, $C_1$-$C_{12}$-Alkyl, $C_5$-$C_7$-Cycloalkyl, $C_3$-$C_5$-Alkenyl, $C_7$-$C_{11}$-Aralkyl, unsubstituiertes oder durch $C_1$-$C_4$-Alkyl substituiertes Phenyl oder eine Gruppe

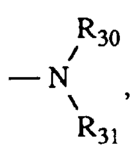

-O-$R_{30}$, -S-$R_{30}$ bedeutet, worin $R_{30}$ und $R_{31}$, unabhängig voneinander, Wasserstoff, $C_1$-$C_{12}$-Alkyl, $C_5$-$C_7$-Cycloalkyl, $C_7$-$C_{11}$-Aralkyl, unsubstituiertes oder durch $C_1$-$C_4$-Alkyl substituiertes Phenyl sind oder $R_{30}$ und $R_{31}$ zusammen mit dem N-Atom an dem sie gebunden sind Piperidin oder Morpholin bilden, oder $R_{29}$ eine Gruppe

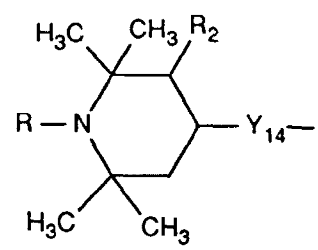

mit der oben angegebenen Bedeutung ist, $Y_{17}$

$-(CH_2)_i-$ oder 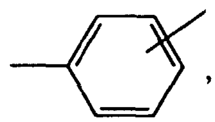,

worin i eine Zahl von 1 bis 8 ist,
$Y_{18}$

$-(CH_2)_k-$, 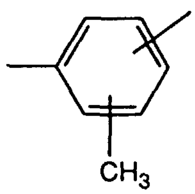 oder 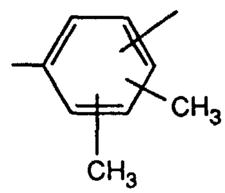,

$Y_{19}$

$-(CH_2)_k-$,

worin k eine Zahl von 2 bis 18 ist,
$Y_{20}$

$-(CH_2)_l-$ oder 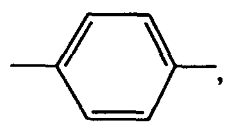,

worin 11 oder 2 ist,
bedeuten und f eine Zahl zwischen 2 und 2000 sein kann, verwendet werden.

**17.** Pigmentzusammensetzungen gemäss Anspruch 1, dadurch gekennzeichnet, dass Polymere mit einer wiederkehrenden Einheit der Formel

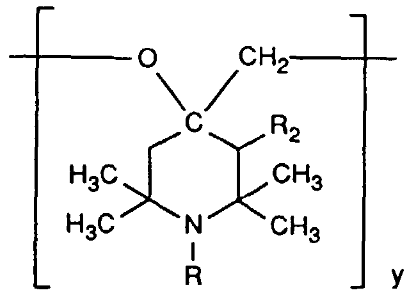

(XXV),

worin R und $R_2$ die in Anspruch 6 angegebene Bedeutung haben und y zwischen 10 und 100 variieren kann, verwendet werden.

**18.** Pigmentzusammensetzungen gemäss Anspruch 1, dadurch gekennzeichnet, dass Polymere mit einer wiederkehrenden Einheit der Formel

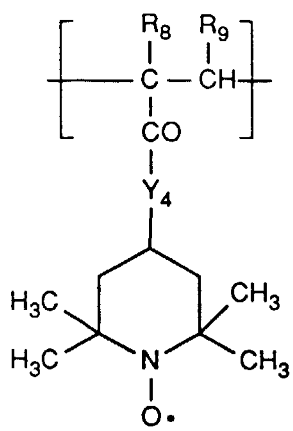

,

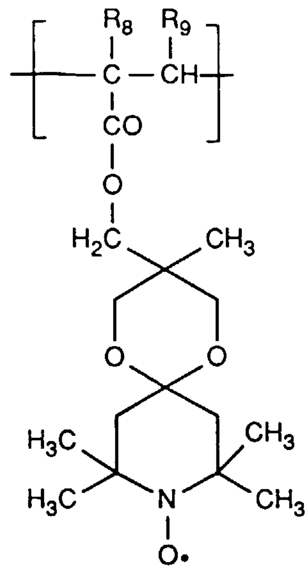

,

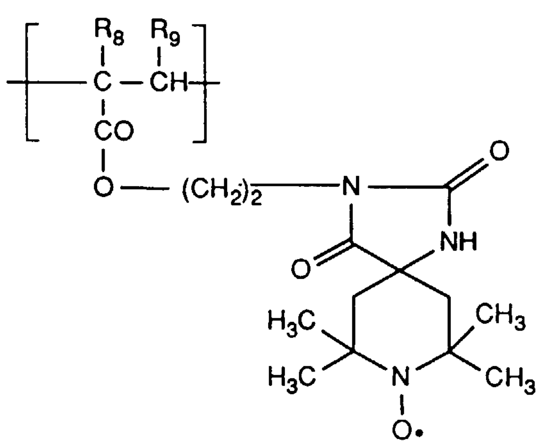

,

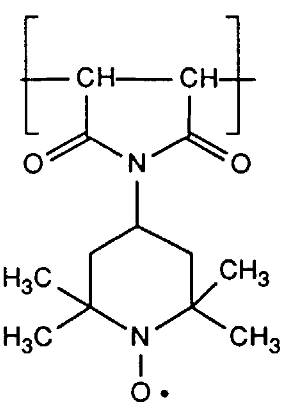

oder

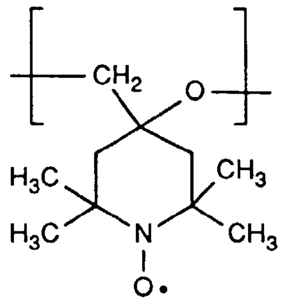

,

worin $R_8$ und $R_9$ unabhängig voneinander Wasserstoff oder Methyl und $Y_4$ -O- oder -NH- bedeuten und wobei auch wiederkehrende Einheiten der Formel

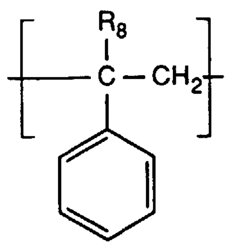

oder

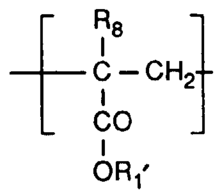

,

worin $R_8$ die oben angegebene Bedeutung hat und $R_1$' Wasserstoff oder Methyl ist, auftreten können, verwendet werden.

**19.** Pigmentzusammensetzungen gemäss Anspruch 1, dadurch gekennzeichnet, dass Polymere mit einer wiederkehrenden Einheit der Formel

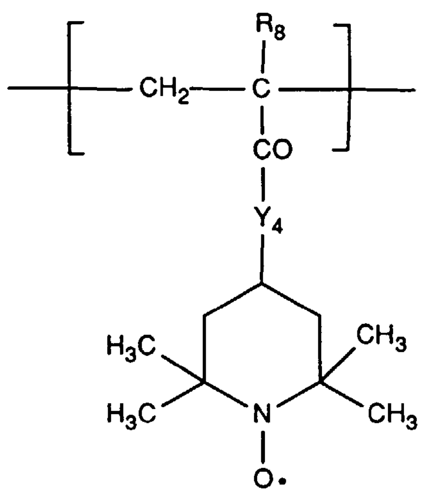

worin $R_8$ Wasserstoff oder Methyl und $Y_4$ -O- oder -NH- bedeuten, verwendet werden.

**20.** Verfahren zur Licht- und Wetterstabilisierung von Pigmenten, ausgewählt aus der Gruppe bestehend aus Diketopyrrolopyrrole, Azopigmente, Chinacridone, Chinophthalone, Phthalocyanine, Indanthrone, Flavanthrone, Pyranthrone, Anthrachinone, Perylene, Dioxazine, Perinone, Thioindigo, Isoindoline, Isoindolinone und Metallkomplexe, durch Vermischung oder Beschichtung der Pigmentpartikel mit 0,01 bis 100 Gew %, bezogen auf das Pigment, eines Kondensations- oder Additionspolymeren, dessen wiederkehrende Moleküleinheit mindestens einen eine Nitroxyl- oder Hydroxylaminogruppe enthaltenden Rest enthält oder durch eine eine Nitroxyl- oder Hydroxylaminogruppe enthaltenden Seitengruppe substituiert ist, sowie dessen Mischpolymere untereinander oder mit Nitroxyl- oder Hydroxylamin-freien Komponenten.

**21.** Verfahren gemäss Anspruch 20, dadurch gekennzeichnet, dass anstelle der Nitroxylverbindung ein entsprechender die Gruppe $>$N-OT, worin T $C_1$-$C_{12}$-Alkyl bedeutet, enthaltender Vorläufer eingesetzt wird, der bei der thermischen Behandlung die Nitroxylverbindung freisetzt.

**22.** Hochmolekulares organisches Material enthaltend eine Pigmentzusammensetzung gemäss Anspruch 1.

**23.** Hochmolekulares organisches Material gemäss Anspruch 21, dadurch gekennzeichnet, dass es sich um einen Lack handelt

**24.** Hochmolekulares organisches Material gemäss Anspruch 22, dadurch gekennzeichnet, dass es sich um einen Automobillack handelt.

## Claims

**1.** A light-stabilized pigment composition comprising

a) at least one organic pigment selected from the group consisting of diketopyrrolopyrroles, azo pigments, quinacridones, quinophthalones, phthalocyanines, indanthrones, flavanthrones, pyranthrones, anthraquinones, perylenes, dioxazines, perinones, thioindigo, isoindolines, isoindolinones and metal complexes and

b) 0.01 to 100% by weight, based on the pigment, of a condensation or addition polymer, the recurring molecular unit of which contains at least one radical containing a nitroxyl or hydroxylamino group or is substituted by a side group containing a nitroxyl or hydroxylamino group, or a copolymer thereof with other such compounds or with nitroxyl- or hydroxylamine-free components.

**2.** A pigment composition according to claim 1, wherein a pigment of the isoindoline, isoindolinone, metal complex or, in particular, the diketopyrrolopyrrole, azo, quinacridone, phthalocyanine, anthraquinone or perylene series is used.

**3.** A pigment composition according to claim 1, wherein a diketopyrrolopyrrole pigment is used preferably in a fine form having an average particle size of 0.005 to 0.1 µm.

**4.** A pigment composition according to claim 1, wherein the polymeric nitroxyl compound is employed in an amount of 0.1-10% by weight, based on the pigment.

**5.** A pigment composition according to claim 1, wherein an organic or inorganic salt of the nitroxyl compound is used.

**6.** A pigment composition according to claim 1, wherein a polymeric nitroxyl compound, the recurring molecular unit of which contains at least one radical of the formula

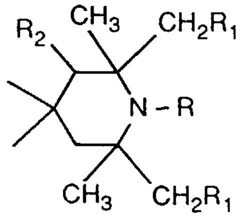

(I)

or is substituted at least once, directly or indirectly, by one of the side groups of the formulae

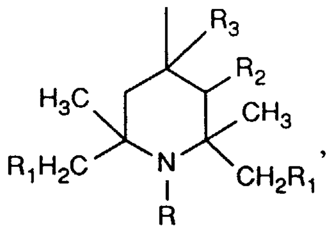
(II),

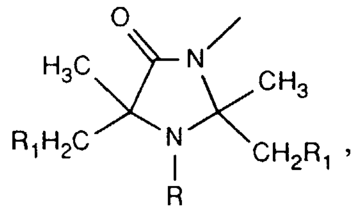
(III),

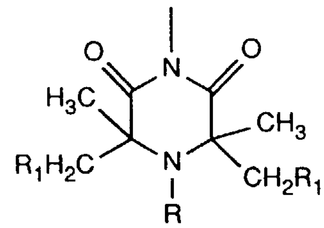
(IV)

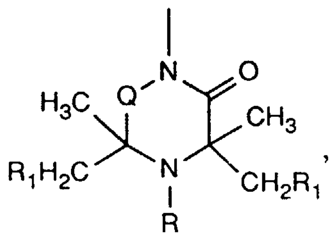
(V),

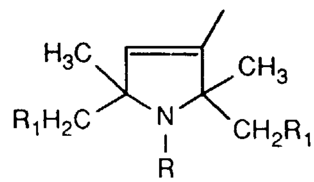
(VI) or

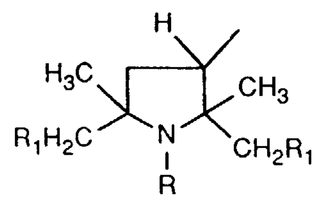
(VII)

in which R is O· or OH,

$R_1$ is hydrogen or $C_1$-$C_4$alkyl,
$R_2$ is hydrogen or $C_1$-$C_4$alkyl,
$R_3$ is hydrogen or a free valency and
Q is $-CH_2-$, $-(CH_2)_2-$ or $-CH_2-CH(CH_3)-$,

or a copolymer with other such compounds or with nitroxyl- and hydroxylamine-free components is used.

**7.** A pigment composition according to claim 6, wherein R in the formulae I-VII is O·.

**8.** A pigment composition according to claim 6, wherein a polymeric nitroxyl compound, the recurring molecular unit of which contains at least one radical of the formula

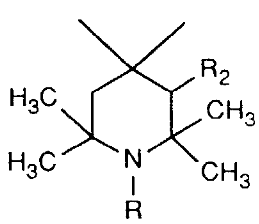
(VIII),

or is substituted at least once, directly or indirectly, by a side group of the formula

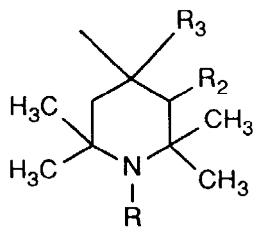

(IX),

in which R, $R_2$ and $R_3$ are as defined in claim 6, is used.

**9.** A pigment composition according to claim 8, wherein a polymeric nitroxyl compound, the recurring molecular unit of which contains at least one radical of the formula

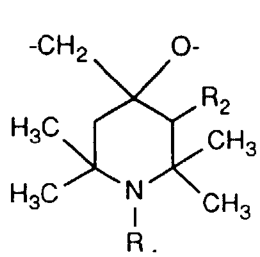

(X) or

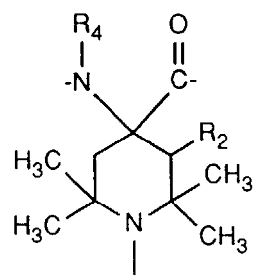

(XI),

or is substituted at least once by a side group of the formula

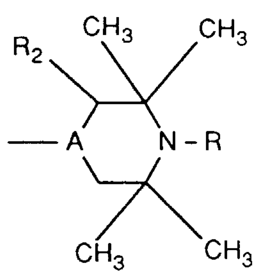

(XII),

in which A is a group of the formula

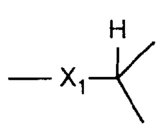

(XIII),

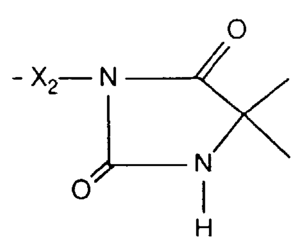

(XIV)

or

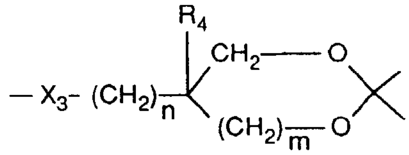 (XV),

R and $R_2$ are as defined in claim 8,
$R_4$ is hydrogen, methyl or ethyl,
m is zero or 1,
n is 1 if m is zero and is zero or 1 if m is 1,
$X_1$ is a direct bond, -O- or a group of the formula -CO-O-, -CO-$NR_5$-,

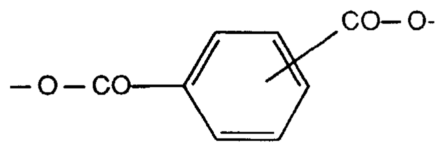 , 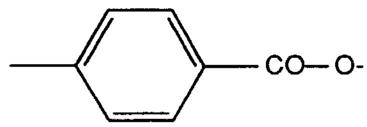

-$CH_2$-O-, -$NR_5$-, -O-$CH_2CH_2$-NH-, -NH-$CH_2CH_2$-O-, -CO-$NR_5$-$(CH_2)_p$-CO-NH-,

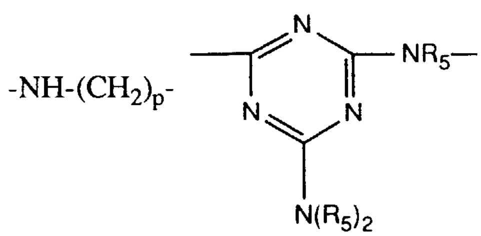 ,

-$(CH_2)_p$-CO-O-
in which $R_5$ is hydrogen, $C_1$-$C_{12}$alkyl, $C_5$-$C_7$cycloalkyl or $C_7$-$C_{11}$aralkyl and p is a number between 1 and 6,
$X_2$ is a direct bond or a group of the formula -$(CH_2)_p$-, -CO-O-$CHR_5$-$CH_2$- or -CO-$NR_4$-$CHR_5$-$CH_2$- wherein $R_4$, $R_5$ and p are as defined above, and
$X_3$ is a direct bond, -O- or a group of the formula -CO-O-, -O-$CH_2$-O- or -$(CH_2)_p$- in which p is as defined above, is used.

**10.** A pigment composition according to claim 1, wherein a polymer having a recurring unit of the formula

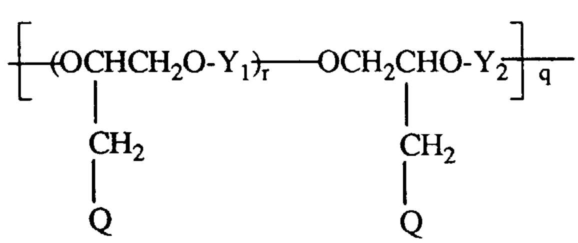 (XVI),

in which Q is a radical of the formula XII in which A is a group -O-CH<, -$NR_5$-CH<

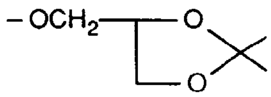
,
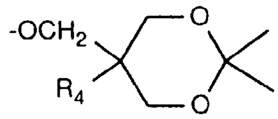
or
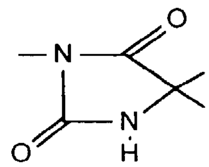
,

R, $R_2$, $R_4$ and $R_5$ are as defined in claim 9,
q is a number between 10 and 50 and
r is zero or 1, and
if r is zero,
$Y_2$ is an aliphatic, aromatic, araliphatic or alicyclic diacyl group having up to 20 carbon atoms,
if r is 1 and Q is a radical of the formula XII in which A is -O-CH<,

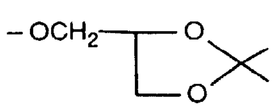
, or
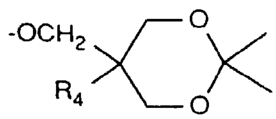
,

$Y_1$ is a saturated, aliphatic diacyl group having up to 20 carbon atoms, a benzenedicarbonyl group, a cyclohexanedicarbonyl group or a group

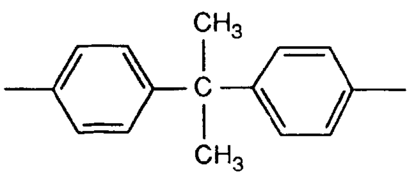
or
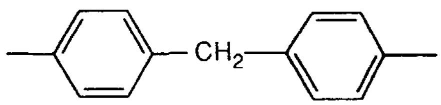
,

and
if r is 1 and Q is a radical of the formula XII in which A is $-NR_5-CH$< or

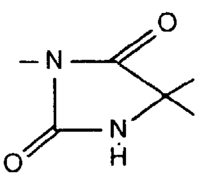
,

$Y_1$ is a saturated, aliphatic diacyl group having up to 20 carbon atoms, a benzenedicarbonyl group, a cyclohexanedicarbonyl group or a group

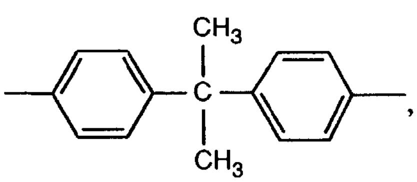
,
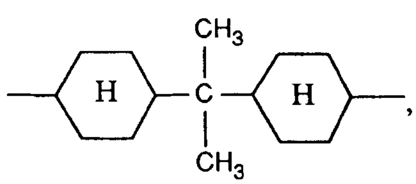
,

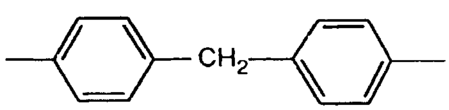

or

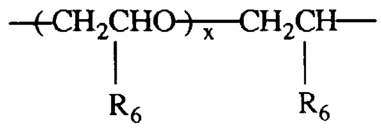

in which x is zero or a number from 1 to 8 and
$R_6$ is hydrogen or methyl, and
if r is 1, $Y_2$ is a saturated, aliphatic diacyl group having up to 20 carbon atoms, a benzenedicarbonyl group, a cyclohexanedicarbonyl group, an alkylene group having 2 to 10 carbon atoms, a xylylene group or a group

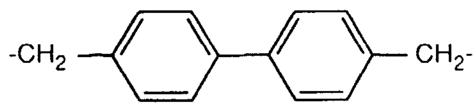

or $-CONH-Y_3-NHCO-$,
in which $Y_3$ is an alkylene group having 2 to 10 carbon atoms or a phenylene group, which is unsubstituted or substituted by methyl,

is used.

**11.** A pigment composition according to claim 1, wherein a polymer having a recurring unit of the formula

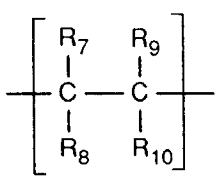

(XVII),

in which $R_7$ is a group of the formula

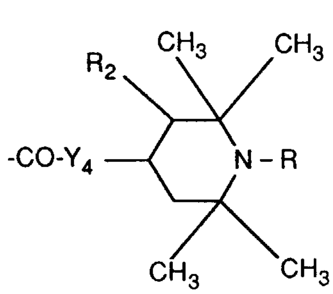

or

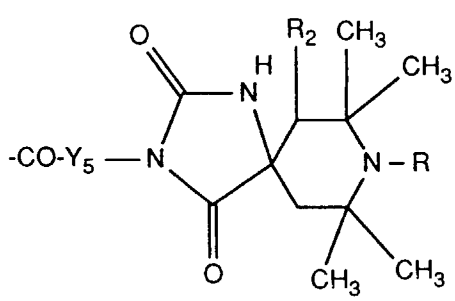

,

in which R and $R_2$ are as defined in claim 9,

$Y_4$ is -O- or $-NR_5-$,
in which $R_5$ is as defined in claim 9,
$Y_5$ is a group

$-O-(CH_2-CH_2)_z-$ or $-NR_5-(CH_2-CH_2)_z-$

in which z is zero or 1,
$R_8$, $R_9$ and $R_{10}$ independently of one another are hydrogen or $C_1$-$C_4$alkyl,
$R_9$ is additionally also -COOH, and, if $R_8$ and $R_{10}$ are hydrogen,
$R_7$ and $R_9$ together form a group of the formula

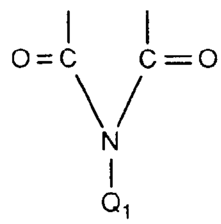

in which $Q_1$ is a group

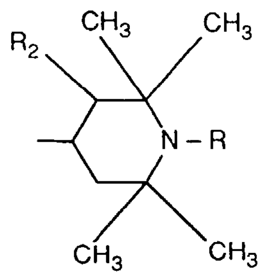

in which R and $R_2$ are as defined in claim 9,
or a copolymer of XVII with a compound containing at least one polymerizable double bond, at least one recurring unit XVII being present per 10 co-components, is used.

**12.** A pigment composition according to claim 1, wherein a copolymer of

1) at least one unsaturated derivative of the formula

$$R_{12}\text{-}Y_6\text{-CO-CH=CH-CO-}Y_7\text{-}R_{13} \quad \text{(XVIII)},$$

and

2) at least one comonomer of the formula

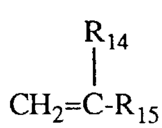

(XIX)

in which

$R_{12}$ is a group of the formula XII as defined in claim 9 and
$R_{13}$ is hydrogen, $C_1$-$C_{12}$alkyl, which can be interrupted by -O-, $C_3$-$C_5$alkenyl, $C_7$-$C_{11}$aralkyl or $C_5$-$C_7$cycloalkyl or is the same as $R_{12}$,
$Y_6$ and $Y_7$ independently of one another are -O- or -$NR_5$-

in which $R_5$ is as defined in claim 9,
$R_{14}$ is hydrogen or methyl,
$R_{15}$ is hydrogen, $C_1$-$C_{12}$alkyl, phenyl, Cl, CN, $C_1$-$C_4$alkoxy, $C_2$-$C_5$alkanoyloxy, -$CONH_2$, -$COOR_{16}$, -$OR_{16}$ or -$CONR_{17}R_{18}$ ,
$R_{16}$ is hydrogen, $C_1$-$C_{12}$alkyl, $C_2$-$C_4$hydroxyalkyl or a group of the formula XII as defined in claim 9,
$R_{17}$ is $C_1$-$C_{12}$alkyl, $C_5$-$C_7$cycloalkyl, phenyl or a group $Q_2$ of the formula

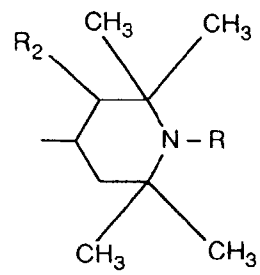

in which R and $R_2$ are as defined in claim 9,
$R_{18}$ is hydrogen, $C_1$-$C_{12}$alkyl, $C_5$-$C_7$cycloalkyl or $C_7$-$C_{11}$aralkyl, or
$R_{17}$ and $R_{18}$, together with the N atom to which they are bonded, form a 5- to 7-membered heterocyclic ring selected from the group consisting of pyrrolidine, piperidine, morpholine or 4-alkylpiperazine,

or a copolymer of

1) at least one maleimide of the formula

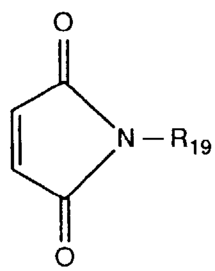

in which $R_{19}$ is a group $Q_2$, and

2) at least one comonomer of the formula

$$CH_2=CH-R_{20}$$

in which $R_{20}$ is hydrogen or $C_1$-$C_{12}$alkyl,

is used.

**13.** A pigment composition according to claim 1, wherein a polymer having a recurring unit of the formula

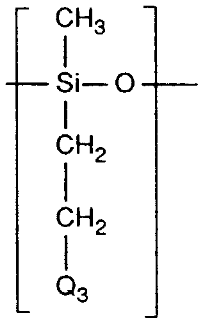

(XX)

in which $Q_3$ is a group of the formula

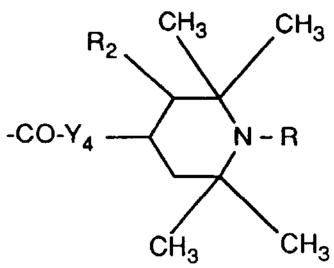

,

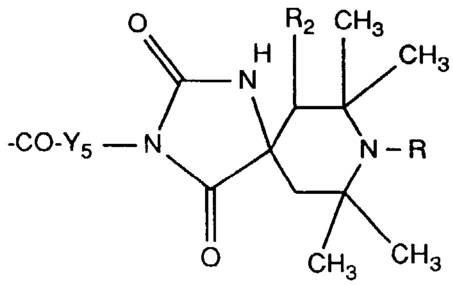

or

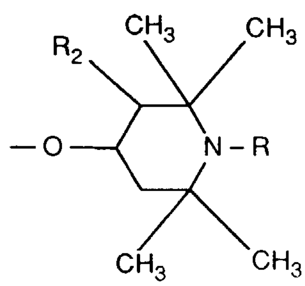

in which R and $R_2$ are as defined in claim 9,

$Y_4$ is -O- or $-NR_5-$
in which $R_5$ is as defined above,
$Y_5$ is a group

$$-O-(CH_2-CH_2)_z- \quad \text{or} \quad -NR_5-(CH_2-CH_2)_z-$$

in which z is zero or 1,

or a copolymer of XX with a compound containing at least one polymerizable double bond, at least one recurring unit XX being present per 10 co-components, is used.

**14.** A pigment composition according to claim 1, wherein a polymer obtained by condensation of a compound of the

formula

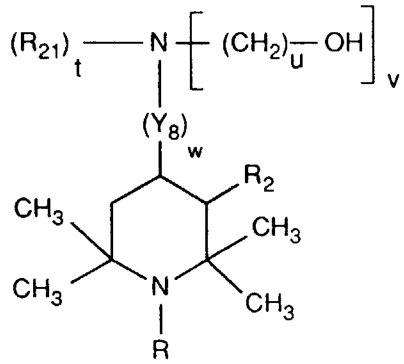

(XXI)

in which R and $R_2$ are as defined in claim 9,

$R_{21}$ is hydrogen,
$Y_8$ is a group $-(CH_2)_u-NH-$,
u is a number from 1 to 4,
t is zero or 1,
w is zero or 1 and
v is 1 or 2, with the proviso that if v is 2, t is zero,
with a diisocyanate of the formula

$$O=C=N-Y_9-N=C=O \qquad (XXII)$$

in which $Y_9$ is a group $-(CH_2)_q-$,

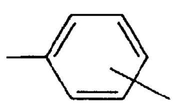 , 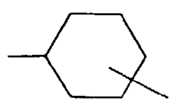 , 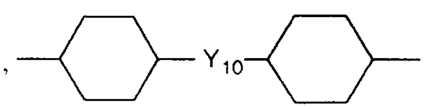 ,

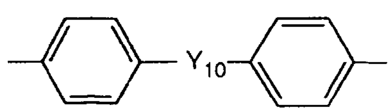

in which $Y_{10}$ is a direct bond, $-(CH_2)_b-$, $-NR_{22}-$, -O-, -S- or $-SO_2-$,

a is a number from 1 to 10 and
b is a number from 1 to 5 and
$R_{22}$ is $C_1$-$C_4$alkyl,

is used.

**15.** A pigment composition according to claim 1, wherein a polymer of the formula

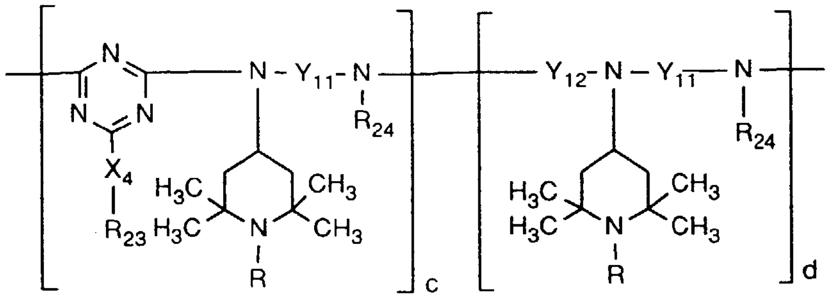

(XXIII),

in which R is as defined in claim 9,

$R_{23}$ is hydrogen, $C_1$-$C_{12}$alkyl, $C_2$-$C_{12}$alkyl, which is substituted by -OH, $C_1$-$C_4$alkyl or $C_2$-$C_8$dialkylamino, or is $C_3$-$C_5$alkenyl, $C_5$-$C_7$cycloalkyl, $C_6$-$C_{18}$aryl, $C_7$-$C_{11}$aralkyl or a group

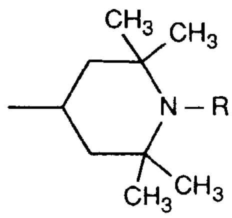

,

$R_{24}$ is $C_5$-$C_7$cycloalkyl, $C_6$-$C_{18}$aryl, $C_7$-$C_{11}$aralkyl or a group of the formula

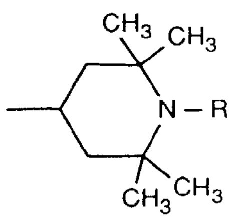

,

$X_4$ is -O-, -S- or -$NR_{25}$-
in which $R_{25}$ can be the same as defined for $R_{23}$,
$R_{23}$ $X_4$- regarded as a single substituent can also be a heterocyclic radical selected from the group consisting of pyrrolidin-1-yl, piperidin-1-yl, hexahydroazepin-1-yl, morpholin-4-yl or methylpiperazin-1-yl,
$Y_{11}$ is $C_2$-$C_{10}$alkylene, $C_4$-$C_{10}$alkylene, which is interrupted by 1 or 2 oxygen or -NH- groups, cyclohexane, phenylene, a group

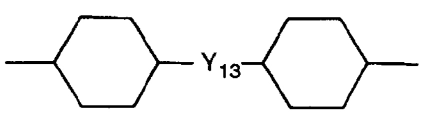

or

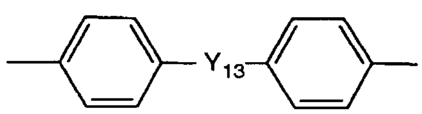

in which $Y_{13}$ is a direct bond

$$-(CH_2)_{1-10}-,$$

or

$Y_{12}$ is $C_2$-$C_{10}$hydroxyalkylene, $C_4$-$C_8$alkenylene or a group -CO-, -OOC-$Y_{11}$-COO-, -COO-$Y_{11}$-OOC-, -OCNH-$Y_{11}$-NHCO-, -HNOC-$Y_{11}$-CONH- or -OC-$Y_{11}$-CO-,

the ratio of c:d being between 4:1 and 1:4, is used.

**16.** A pigment composition according to claim 1, wherein a polymer having a recurring unit of the formula

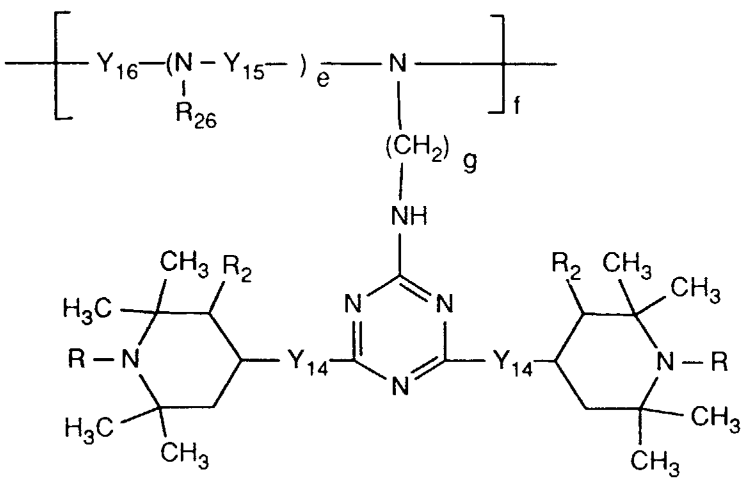

(XXIV),

in which R and $R_2$ are as defined in claim 9,
$Y_{14}$ is -O- or -$NR_{18}$-
in which $R_{18}$ is $C_1$-$C_{12}$alkyl, $C_5$-$C_7$cycloalkyl or $C_7$-$C_{11}$aralkyl,
g can be a number from 2 to 12,
$Y_{15}$ is the group

$$-(CH_2)_g- ,$$

in which g is as defined above,
or the group

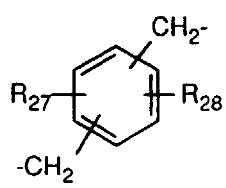

in which $R_{27}$ and $R_{28}$ independently of one another are hydrogen or methyl, or

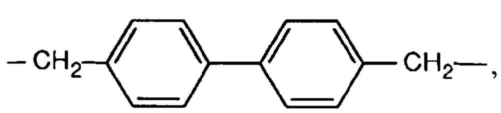

$$-CH_2-\underset{OH}{CH}-CH_2- ,$$

$$-CH_2-CH_2-(OCH_2-CH_2)_h-$$

in which h can be 1 to 3,
$R_{26}$ is hydrogen, $C_1$-$C_{12}$alkyl, a group of the formula

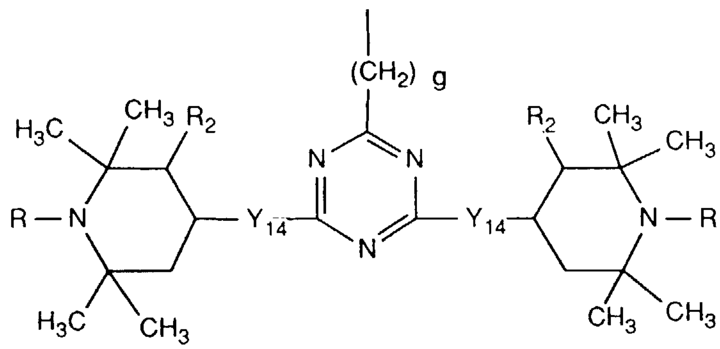

in which R, $R_2$ and $Y_{14}$ are as defined in claim 9 and
g is as defined above,
or a group of the formula

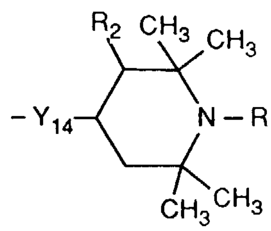

as defined above,
e is zero or 1,
$Y_{16}$, if e is zero, is as defined for $Y_{15}$ or is a group

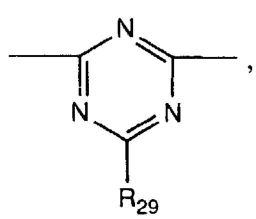

-OC-$Y_{17}$-CO-, -OCHN-$Y_{18}$-NHCO-, -COO-$Y_{19}$-OOC- or -$CH_2$-$Y_{20}$-CO-
in which $R_{29}$ is hydrogen, $C_1$-$C_{12}$alkyl, $C_5$-$C_7$cycloalkyl, $C_3$-$C_5$alkenyl, $C_7$-$C_{11}$aralkyl, phenyl, which is unsubstituted or substituted by $C_1$-$C_4$alkyl, or a group

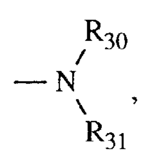

$-O-R_{30}$ or $-S-R_{30}$

in which $R_{30}$ and $R_{31}$ independently of one another are hydrogen, $C_1$-$C_{12}$alkyl, $C_5$-$C_7$cycloalkyl, $C_7$-$C_{11}$aralkyl or phenyl, which is unsubstituted or substituted by $C_1$-$C_4$alkyl, or

$R_{30}$ and $R_{31}$, together with the N atom to which they are bonded, form piperidine or morpholine, or

$R_{29}$ is a group

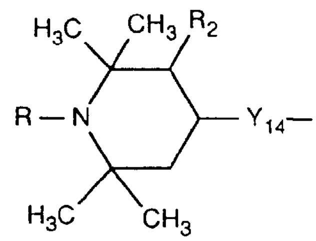

as defined above,

$Y_{17}$ is

$-(CH_2)_i-$ or 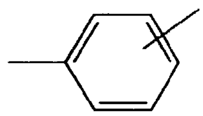

in which i is a number from 1 to 8,

$Y_{18}$ is

$-(CH_2)_k-$, 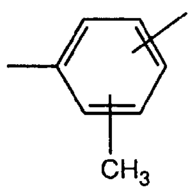 or 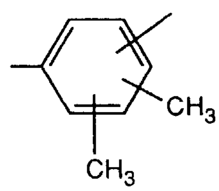,

$Y_{19}$ is

$$-(CH_2)_k-,$$

in which k is a number from 2 to 18,

$Y_{20}$ is

$-(CH_2)_l-$ or 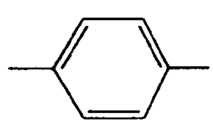

in which 1 is 1 or 2,

and f can be a number between 2 and 2000,

is used.

**17.** A pigment composition according to claim 1, wherein a polymer having a recurring unit of the formula

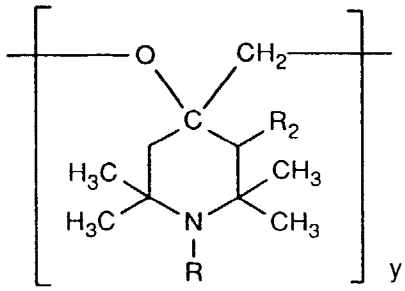

(XXV)

in which R and $R_2$ are as defined in claim 6 and y can vary between 10 and 100,

is used.

**18.** A pigment composition according to claim 1, wherein a polymer having a recurring unit of the formula

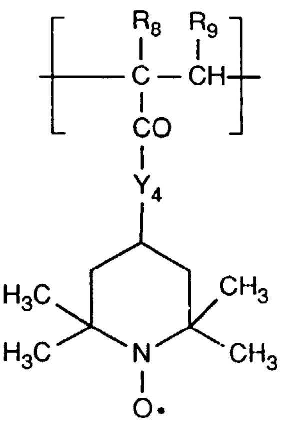

,

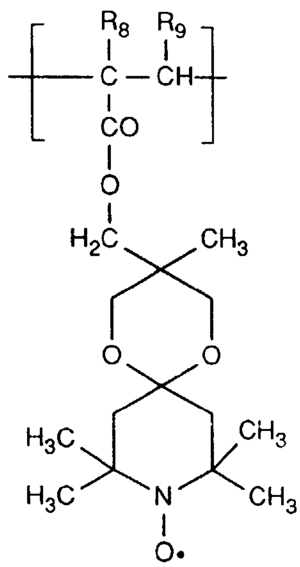

,

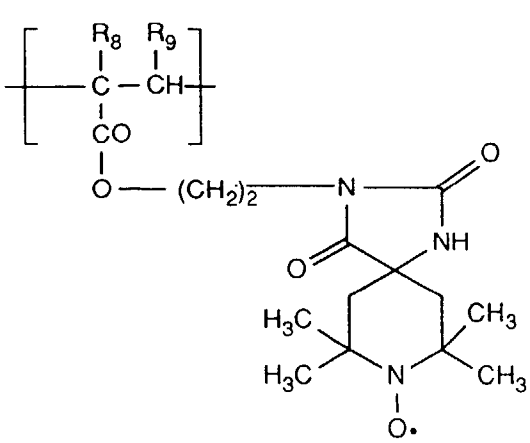

,

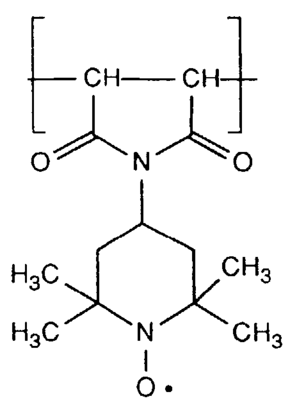

or

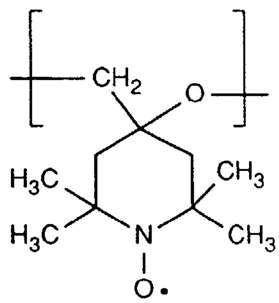

in which $R_8$ and $R_9$ independently of one another are hydrogen or methyl and $Y_4$ is -O- or -NH-, and in which recurring units of the formula

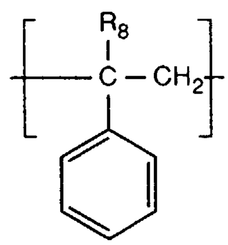

or

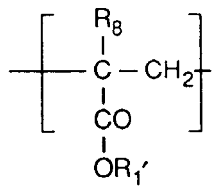

in which $R_8$ is as defined above and
$R_1$' is hydrogen or methyl,

can also occur, is used.

19. A pigment composition according to claim 1, wherein a polymer having a recurring unit of the formula

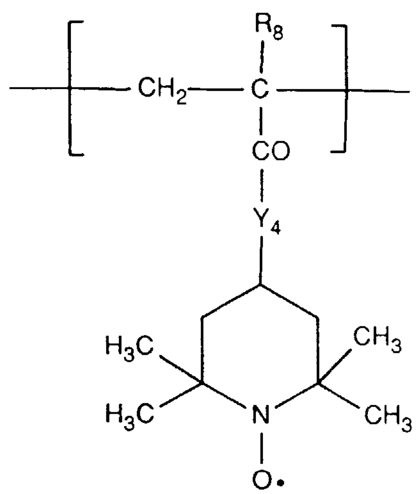

in which $R_8$ is hydrogen or methyl and
$Y_4$ is -O- or -NH-,

is used.

**20.** A process for light- and weathering-stabilization of a pigment selected from the group consisting of diketopyrrolopyrroles, azo pigments, quinacridones, quinophthalones, phthalocyanines, indanthrones, flavanthrones, pyranthrones, anthraquinones, perylenes, dioxazines, perinones, thioindigo, isoindolines, isoindolinones and metal complexes, by mixing or coating the pigment particles with 0.01 to 100% by weight, based on the pigment, of a condensation or addition polymer, the recurring molecular unit of which contains at least one radical containing a nitroxyl or hydroxylamino group or is substituted by a side group containing a nitroxyl or hydroxylamino group, or a copolymer thereof with other such compounds or with nitroxyl- or hydroxylamine-free components.

**21.** A process according to claim 20, wherein, instead of the nitroxyl compound, a corresponding precursor containing the group $>$N-OT,
in which T is $C_1$-$C_{12}$alkyl, which liberates the nitroxyl compound during heat treatment, is employed.

**22.** High molecular weight organic material comprising a pigment composition according to claim 1.

**23.** High molecular weight organic material according to claim 21, which is a coating material.

**24.** High molecular weight organic material according to claim 22, which is an automobile paint.

**Revendications**

**1.** Compositions pigmentaires photostabilisées contenant

a) au moins un pigment organique pris dans le groupe constitué de dicétopyrrolopyrroles, de pigments azoïques, de quinacridones, de quinophtalones, de phtalocyanines, d'indanthrones, de flavanthrones, de pyranthrones, d'anthraquinones, de pérylènes, de dioxazines, de périnones, de thioindigo, d'isoindolines, d'isoindolinones et des complexes métalliques, et
b) de 0,01 à 100 % en poids par rapport au pigment d'un polymère de condensation ou d'addition, dont le motif moléculaire répétitif comporte au moins un reste contenant un groupe nitroxyle ou hydroxylamino ou est substitué par un groupe latéral comportant un groupe nitroxyle ou hydroxylamino, ainsi que ses copolymères entre eux ou avec des composants ne comportant pas de groupes nitroxyle ou hydroxylamino.

**2.** Compositions pigmentaires selon la revendication 1, caractérisées en ce qu'on utilise un pigment de la série d'isoindoline, d'isoindolinone, de complexes métalliques, et plus particulièrement de la série de dicétopyrrolopyrrole, azoïque, de quinacridone, de phtalocyanine, d'anthraquinone et de pérylène.

**3.** Compositions pigmentaires selon la revendication 1, caractérisées en ce qu'on utilise un pigment de dicétopyrrolopyrrole, de préférence sous forme finement divisée, ayant une granulométrie moyenne de 0,005 à 0,1 µm.

**4.** Compositions pigmentaires selon la revendication 1, caractérisées en ce qu'on utilise le composé nitroxylé polymère dans une quantité de 0,1 à 10 % en poids par rapport au pigment.

**5.** Compositions pigmentaires selon la revendication 1, caractérisées en ce qu'on utilise un sel organique ou inorganique du composé nitroxylé.

**6.** Compositions pigmentaires selon la revendication 1, caractérisées en ce qu'on utilise des composés nitroxylés polymères dont le motif moléculaire répétitif contient au moins un reste de formule

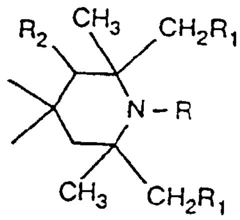

(I)

ou est substitué au moins une fois directement ou indirectement par un des groupes latéraux de formule

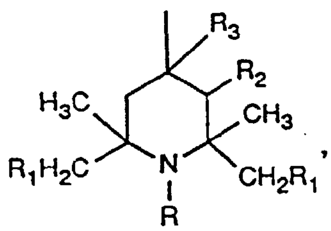

(II)

,

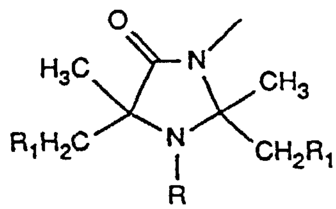

(III)

,

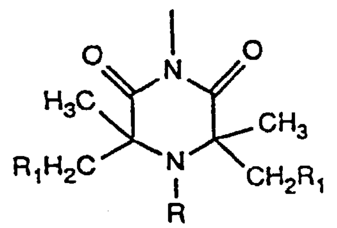

(IV)

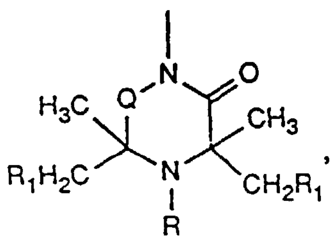

(V)

,

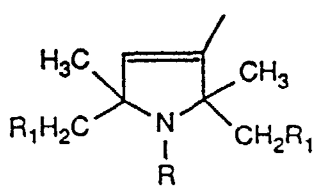

(VI)

ou

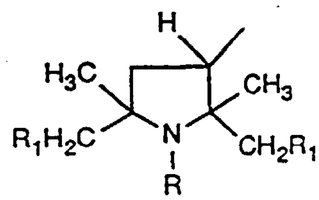

(VII)

où R représente O· ou OH, $R_1$ représente l'hydrogène ou alkyle en $C_1$-$C_4$, $R_2$ représente l'hydrogène ou alkyle en $C_1$-$C_4$, $R_3$ représente l'hydrogène ou une valence libre, et Q représente $-CH_2-$, $-(CH_2)_2-$ ou $-CH_2-CH(CH_3)-$, ainsi que des copolymères entre eux ou avec des composants ne comportant pas de groupes nitroxyle et hydroxylamine.

**7.** Compositions pigmentaires selon la revendication 6, caractérisées en ce que dans les formules I à VII, R représente O·.

**8.** Compositions pigmentaires selon la revendication 6, caractérisées en ce qu'on utilise des composés nitroxylés polymères dont le motif moléculaire répétitif contient au moins un reste de formule

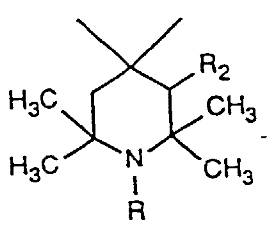

(VIII)

ou est substitué au moins une fois directement ou indirectement par un groupe latéral de formule

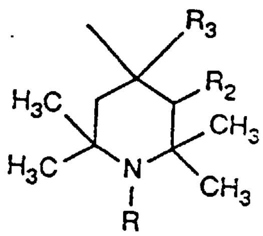

(IX)

où R, $R_2$ et $R_3$ ont la signification donnée dans la revendication 6.

**9.** Compositions pigmentaires selon la revendication 8, caractérisées en ce qu'on utilise des composés nitroxylés polymères dont le motif moléculaire répétitif comporte au moins un reste de formule

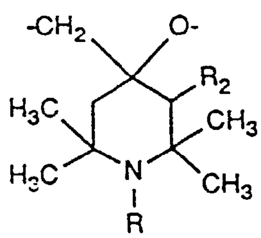

(X) ou

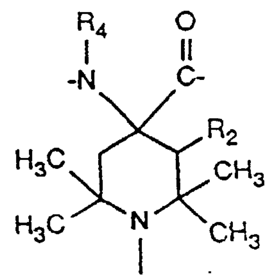

(XI)

ou est substitué au moins une fois par un groupe latéral de formule

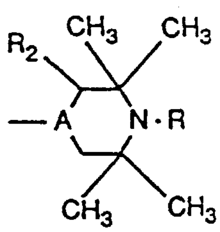

(XII)

dans laquelle A représente un groupe de formules

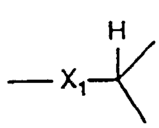

(XIII),

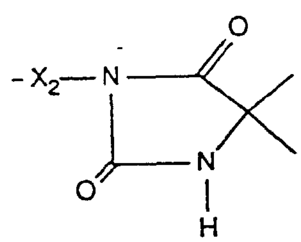

(XIV)

ou

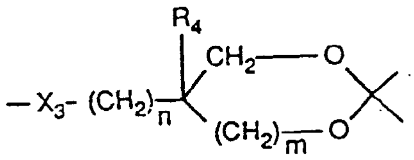 (XV)

R et $R_2$ ont les significations données dans la revendication 8, $R_4$ représente l'hydrogène, méthyle ou éthyle, m vaut 0 ou 1, lorsque m vaut 0, n vaut 1, et lorsque m vaut 1, n vaut 0 ou 1,

$X_1$ représente une liaison directe, -O-, ou un groupe de formule -CO-O-, $-CO-NR_5-$,

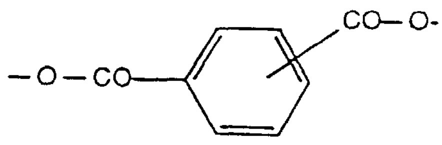 , 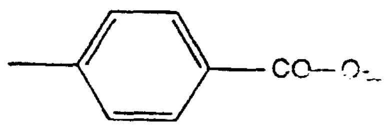

$-CH_2-O-$, $-NR_5-$, $-O-CH_2CH_2-NH-$, $-NH-CH_2CH_2-O-$, $-CO-NR_5-(CH_2)_p-CO-NH-$,

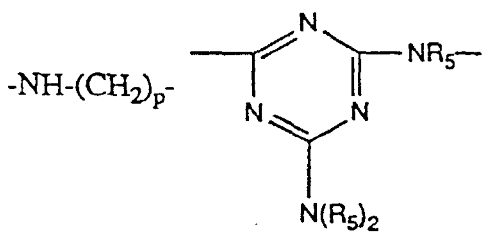 ,

$-(CH_2)_p-CO-O-$,
dans lesquelles $R_5$ représente l'hydrogène, alkyle en $C_1$-$C_{12}$, cycloalkyle en $C_5$-$C_7$ ou aralkyle en $C_7$-$C_{11}$, et p est un nombre compris entre 1 et 6,

$X_2$ représente une liaison directe ou un groupe de formule $-(CH_2)_p-$, $-CO-O-CHR_5-CH_2-$ ou $-CO-NR_4-CHR_5-CH_2-$ dans lesquelles $R_4$, $R_5$ et p ont les significations données ci-dessus, et

$X_3$ représente une liaison directe, -O-, ou un groupe de formule -CO-O-, $-O-CH_2-O-$ ou $-(CH_2)_p-$ où p a la signification donnée ci-dessus.

**10.** Compositions pigmentaires selon la revendication 1, caractérisées en ce qu'on utilise des polymères avec un motif répétitif de formule

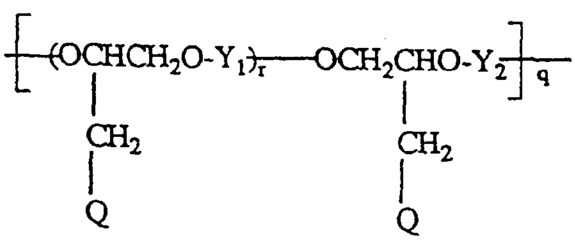 (XVI),

dans laquelle Q représente un reste de formule XII,
dans laquelle A représente un groupe $-O-CH<$ $-NR_5-CH<$

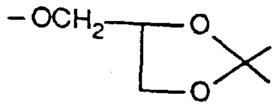, 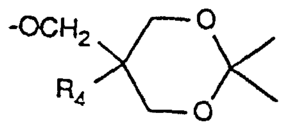 ou 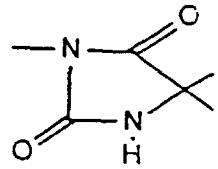

R, $R_2$, $R_4$ et $R_5$ ont la signification donnée dans la revendication 9,
q est un nombre compris entre 10 à 50 et r vaut 0 ou 1, et
lorsque r vaut 0,
$Y_2$ représente un groupe diacyle aliphatique, aromatique, araliphatique ou alicyclique avec jusqu'à 20 atomes de carbone,
lorsque r vaut 1, et Q représente un reste de formule XII dans laquelle A représente -O-CH<,

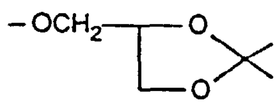, ou 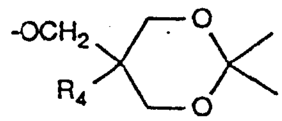

$Y_1$ représente un groupe diacyle aliphatique saturé avec jusqu'à 20 atomes de carbone, un groupe benzènedicarbonyle, un groupe cyclohexanedicarbonyle, un groupe

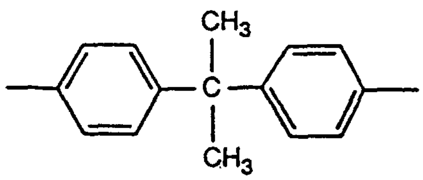 ou 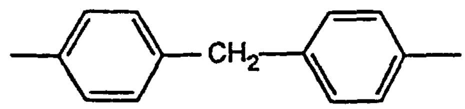

et
lorsque r vaut 1, et Q représente un reste de formule XII, dans lequel A représente $-NR_5-CH<$ ou ou

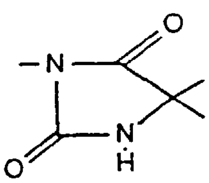

$Y_1$ est un groupe diacyle aliphatique saturé, avec jusqu'à 20 atomes de carbone, un groupe benzènedicarbonyle, un groupe cyclohexanedicarbonyle, un groupe

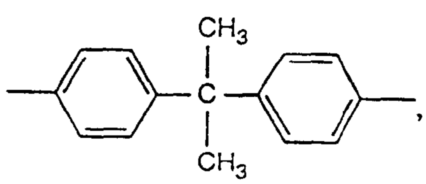, 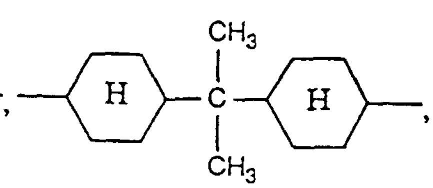,

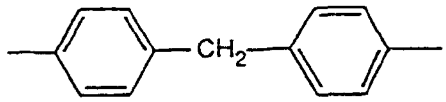

ou

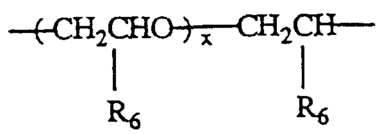

dans lesquelles x vaut 0 ou représente un nombre de 1 à 8 et $R_6$ représente l'hydrogène ou méthyle, et $Y_2$, lorsque r vaut 1, représente un groupe diacyle aliphatique saturé avec jusqu'à 20 atomes de carbone, un groupe benzènedicarbonyle, un groupe cyclohexanedicarbonyle, un groupe alkylène avec 2 à 10 atomes de carbone, un groupe xylylène, un groupe

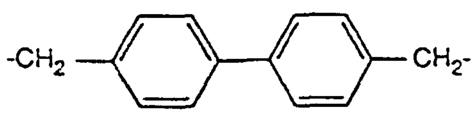

ou $-CONH-Y_3-NHCO-$
dans lesquelles $Y_3$ représente un groupe alkylène avec 2 à 10 atomes de carbone, ou un groupe phénylène non substitué ou substitué par méthyle.

**11.** Compositions pigmentaires selon la revendication 1, caractérisées en ce qu'on utilise des polymères comportant un motif répétitif de formule

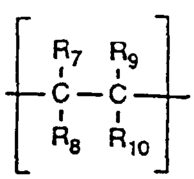

(XVII),

où $R_7$ est un groupe de formule

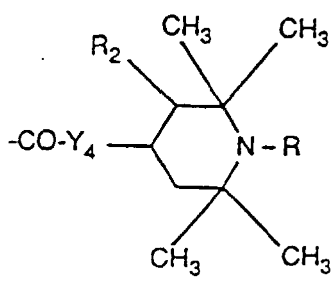

oder

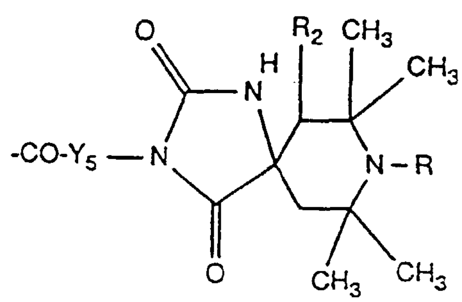

,

où R et $R_2$ ont la signification donnée ci-dessus, $Y_4$ représente -O- ou $-NR_5-$, $R_5$ a la signification donnée ci-dessus, $Y_5$ représente un groupe

$$-O-(-CH_2-CH_2-)_z- \quad \text{ou} \quad -NR_5-(-CH_2-CH_2-)_z-,$$

où z vaut 0 ou 1, $R_8$, $R_9$ et $R_{10}$, indépendamment l'un de l'autre, représentent l'hydrogène ou alkyle en $C_1$-$C_4$, $R_9$ est de plus aussi -COOH, et lorsque $R_8$ et $R_{10}$ représentent l'hydrogène, $R_7$ et $R_9$ ensemble forment un groupe de formule

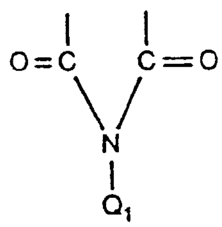

où $Q_1$ est un groupe

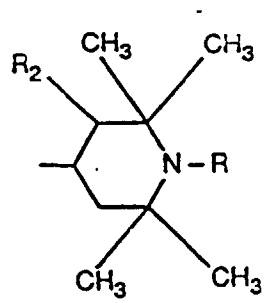

dans laquelle R et $R_2$ ont la signification donnée ci-dessus, ainsi que des copolymères de XVII avec un composé comportant au moins une double liaison polymérisable, en contenant au moins un motif XVII répétitif sur 10 co-composants.

**12.** Compositions pigmentaires selon la revendication 1 caractérisées en ce qu'on utilise des copolymères constitués

1) d'au moins un dérivé insaturé de formule

$$R_{12}\text{-}Y_6\text{-CO-CH=CH-CO-}Y_7\text{-}R_{13} \qquad \text{(XVIII)},$$

et
2) d'au moins un comonomère de formule

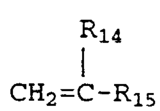

(XIX),

où

$R_{12}$ représente un groupe de formule XII ayant la signification donnée ci-dessus,
$R_{13}$ représente l'hydrogène, alkyle en $C_1$-$C_{12}$, lequel peut être interrompu par -O-, alcényle en $C_3$-$C_5$, aralkyle en $C_7$-$C_{11}$, cycloalkyle en $C_5$-$C_7$ ou sont égaux à $R_{12}$,
$Y_6$ et $Y_7$, indépendamment l'un de l'autre, représentent -O- ou -$NR_5$-, $R_5$ ayant la signification donnée ci-dessus,
$R_{14}$ représente l'hydrogène ou méthyle,

$R_{15}$ représente l'hydrogène, alkyle en $C_1$-$C_{12}$, phényle, Cl, CN, alcoxy en $C_1$-$C_4$, alcanoyloxy en $C_2$-$C_5$, -$CONH_2$, -$COOR_{16}$, -$OR_{16}$, ou -$CONR_{17}R_{18}$,
$R_{16}$ représente l'hydrogène, alkyle en $C_1$-$C_{12}$,hydroxyalkyle en $C_2$-$C_4$ ou un groupe de formule XII ayant la signification donnée dans la revendication 9,
$R_{17}$ représente alkyle en $C_1$-$C_{12}$, cycloalkyle en $C_5$-$C_7$, phényle ou un groupe $Q_2$ de formule

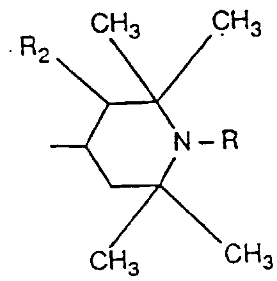

où R et $R_2$ ont les significations données dans la revendication 9,
$R_{18}$ représente l'hydrogène, alkyle en $C_1$-$C_{12}$, cycloalkyle en $C_5$-$C_7$ ou aralkyle en $C_7$-$C_{11}$, ou
$R_{17}$ et $R_{18}$, ensemble avec l'atome de N auquel ils sont liés, forment un hétérocycle à 5 à 7 chaînons pris parmi les pyrrolidine, pipéridine, morpholine ou 4-alkylpipérazine,

ou des copolymères de

1) au moins un maléimide de formule

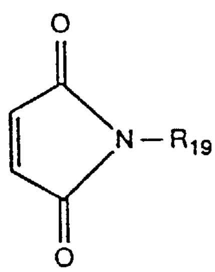

,

où $R_{19}$ est un groupe $Q_2$, et
2) au moins un comonomère de formule

$$CH_2{=}CH\text{-}R_{20},$$

dans laquelle $R_{20}$ représente l'hydrogène ou alkyle en $C_1$-$C_{12}$.

**13.** Compositions pigmentaires selon la revendication 1, caractérisées en ce que le polymère comporte un motif répétitif de formule

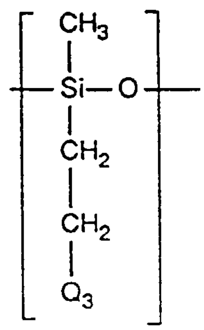

(XX) ,

dans laquelle $Q_3$ représente un groupe de formule

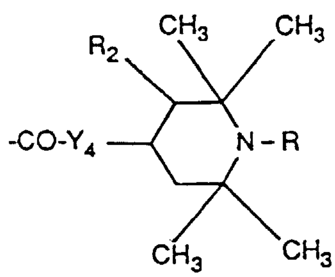

,

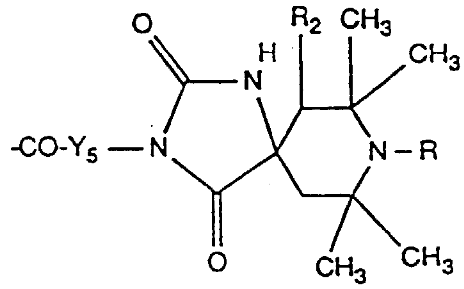

ou

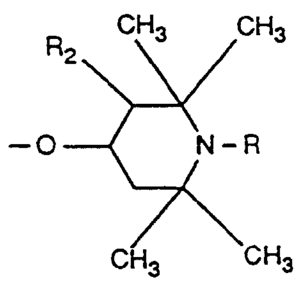

,

dans lesquelles R et $R_2$ ont la signification donnée ci-dessus, $Y_4$ représente -O- ou $-NR_5-$, $R_5$ ayant la signification donnée ci-dessus, $Y_5$ est un groupe

$$-O-\!\!\left(-CH_2-CH_2-\right)_z- \quad \text{ou} \quad -NR_5-\!\!\left(-CH_2-CH_2-\right)_z-,$$

dans lesquelles z vaut 0 ou 1, ainsi que des copolymères de XX avec un composé contenant au moins une double liaison polymérisable, contenant au moins un motif répétitif XX pour 10 co-composants.

**14.** Compositions pigmentaires selon la revendication 1, caractérisées en ce que des polymères obtenus par condensation d'un composé de formule

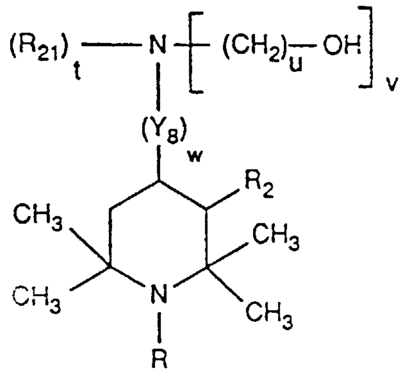

(XXI),

où R et $R_2$ ont la signification donnée ci-dessus, $R_{21}$ est l'hydrogène, $Y_8$ est un groupe $-(CH_2)_u-NH-$, u va de 1 à 4, t vaut 0 ou 1, w vaut 0 ou 1 et v vaut 1 ou 2, à la condition que lorsque v vaut 2, t vaut 0, avec un diisocyanate de formule

$$O{=}C{=}N{-}Y_9{-}N{=}C{=}O \qquad \text{(XXII)}$$

dans laquelle $Y_9$ est un groupe $-(CH_2)_q-$,

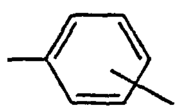
,
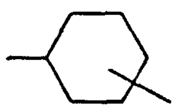
,
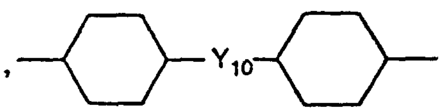
,

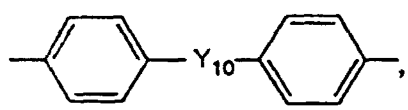
,

où $Y_{10}$ est une liaison directe, $-(CH_2)_b-$, $-NR_{22}-$, -O-, -S-, $-SO_2-$, a est un nombre de 1 à 10, et b est un nombre de 1 à 5, et $R_{22}$ est un alkyle en $C_1$-$C_4$.

**15.** Compositions pigmentaires selon la revendication 1, caractérisées en ce qu'on utilise des polymères de formule

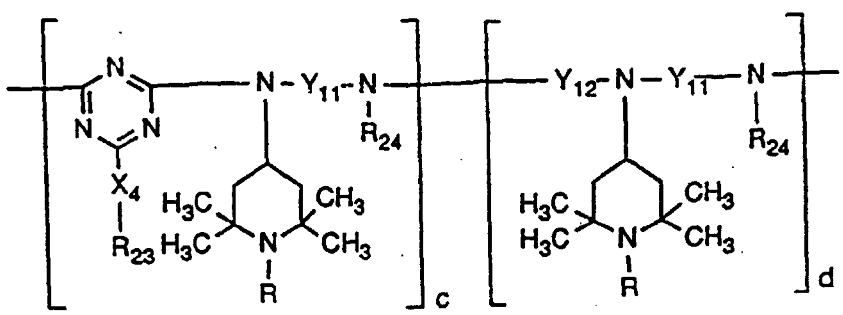

(XXIII),

dans laquelle R a la signification donnée ci-dessus,
$R_{23}$ représente l'hydrogène, alkyle en $C_1$-$C_{12}$, aralkyle en $C_7$-$C_{11}$, aryle en $C_6$-$C_{18}$, cycloalkyle en $C_5$-$C_7$, al-

cényle en $C_3$-$C_5$, alkyle en $C_2$-$C_{12}$ substitué par -OH, alkyle en $C_1$-$C_4$ ou di(alkyle en $C_2$-$C_8$)amino ou un groupe

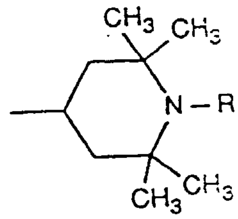

$R_{24}$ est cycloalkyle en $C_5$-$C_7$, aryle en $C_6$-$C_{18}$, aralkyle en $C_7$-$C_{11}$, ou un groupe de formule

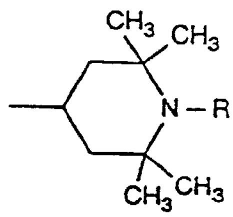

$X_4$ représente -O-, -S- ou -$NR_{25}$-, $R_{25}$ a la même signification que $R_{23}$, $R_{23}X_4$, considéré comme substituant individuel, peut être aussi un reste hétérocyclique pris dans le groupe comportant pyrrolidin-1-yle, pipéridin-1-yle, hexahydroazépin-1-yle, morpholin-4-yle ou méthylpipérazin-1-yle, $Y_{11}$ représente alkylène en $C_2$-$C_{10}$, phénylène, cyclohexane, alkylène en $C_4$-$C_{10}$ interrompu par 1 ou 2 atomes d'oxygène ou groupe -NH, un groupe

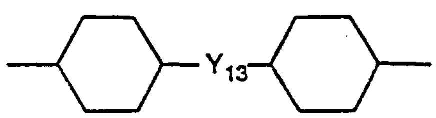

ou

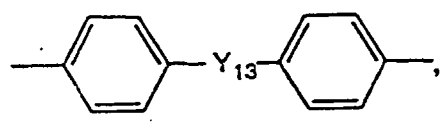

,

où $Y_{13}$ représente une liaison directe ou

$$-\left(CH_2\right)_{1-10},$$

$Y_{12}$ représente hydroxyalkylène en $C_2$-$C_{10}$, alkylène en $C_4$-$C_8$ ou un groupe -CO-, -OOC-$Y_{11}$-COO-, -COO-$Y_{11}$-OOC-, -OCNH-$Y_{11}$-NHCO-, HNOC-$Y_{11}$-CONH- ou -OC-$Y_{11}$-CO-,

le rapport c:d étant compris entre 4:1 et 1:4.

**16.** Compositions pigmentaires selon la revendication 1, caractérisées en ce qu'on utilise des polymères comportant un motif répétitif de formule

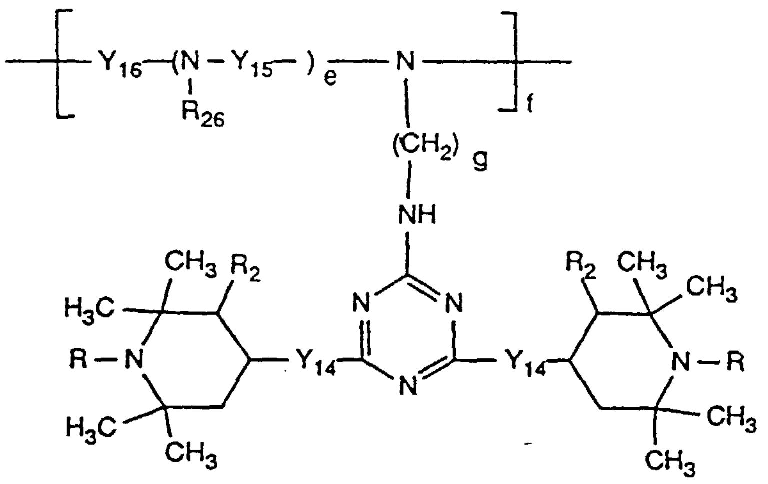

(XXIV),

où R et $R_2$ ont la signification donnée dans la revendication 9,
$Y_{14}$ représente -O- ou $-NR_{18}-$, $R_{18}$ étant alkyle en $C_1$-$C_{12}$, cycloalkyle en $C_5$-$C_7$ ou aralkyle en $C_7$-$C_{11}$,
g peut être un nombre de 2 à 12,
$Y_{15}$ représente le groupe

$$-(-CH_2-)_g-$$

g ayant la signification donnée ci-dessus, le groupe

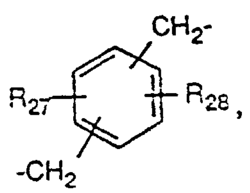

dans laquelle $R_{27}$ et $R_{28}$, indépendamment l'un de l'autre, représentent l'hydrogène ou méthyle,

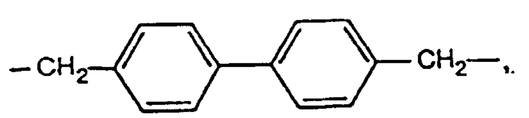

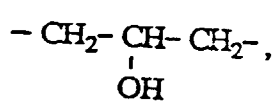

$$-CH_2-CH_2-(-OCH_2-CH_2-)_h ,$$

dans lesquelles h peut aller de 1 à 3,
$R_{26}$ est l'hydrogène, alkyle en $C_1$-$C_{12}$, un groupe de formule

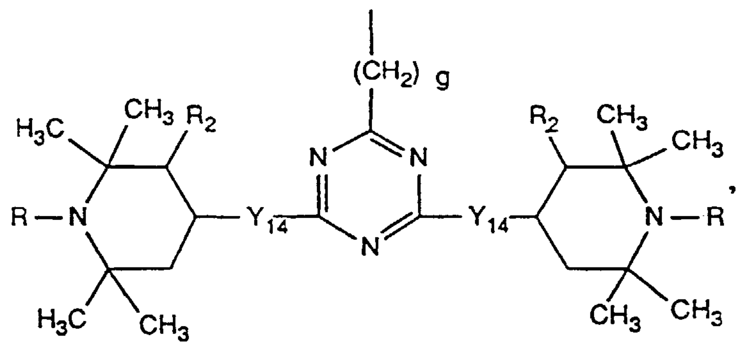

dans laquelle R, $R_2$, $Y_{14}$ et g ont les significations données dans la revendication 9, ou un groupe de formule

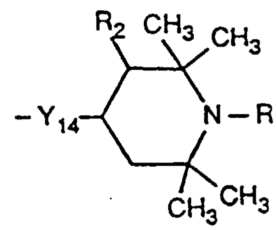

avec la signification donnée ci-dessus,
e est 0 ou 1,
$Y_{16}$, lorsque e vaut 0, a la signification de $Y_{15}$ ou d'un groupe

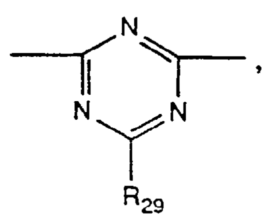

$-OC-Y_{17}-CO-$, $-OCHN-Y_{18}-NHCO-$, $-COO-Y_{19}-OOC-$ ou
où $R_{29}$ représente l'hydrogène, alkyle en $C_1$-$C_{12}$, cycloalkyle en $C_5$-$C_7$, alcényle en $C_3$-$C_5$, aralkyle en $C_7$-$C_{11}$, phényle non substitué ou substitué par alkyle en $C_1$-$C_4$, ou un groupe

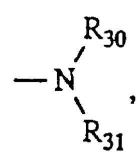

$-O-R_{30}$, $-S-R_{30}$
où $R_{30}$ et $R_{31}$, indépendamment l'un de l'autre, représentent l'hydrogène, alkyle en $C_1$-$C_{12}$, cycloalkyle en $C_5$-$C_7$, aralkyle en $C_7$-$C_{11}$, phényle non substitué ou substitué par alkyle en $C_1$-$C_4$, ou $R_{30}$ et $R_{31}$, ensemble avec l'atome de N auquel ils sont liés, forment une pipéridine ou une morpholine, ou $R_{29}$ représente un groupe

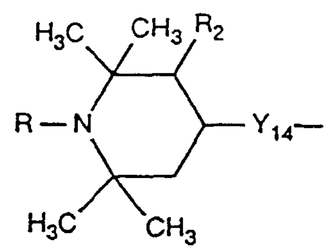

ayant la signification donnée ci-dessus, $Y_{17}$

$-(CH_2)_i-$ ou 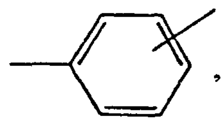 ,

où i va de 1 à 8,
$Y_{18}$

$-(CH_2)_k-$, 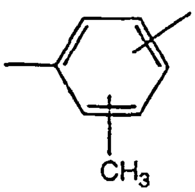 ou 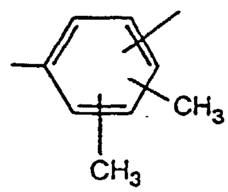 ,

$Y_{19}$

$-(CH_2)_k-$,

où k va de 2 à 18,
$Y_{20}$

$-(CH_2)_l-$ ou 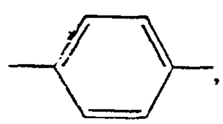 ,

où 11 ou 2 ,
et f peut être un nombre compris entre 2 et 2 000.

**17.** Compositions pigmentaires selon la revendication 1 caractérisées en ce qu'on utilise des polymères comportant un motif répétitif de formule

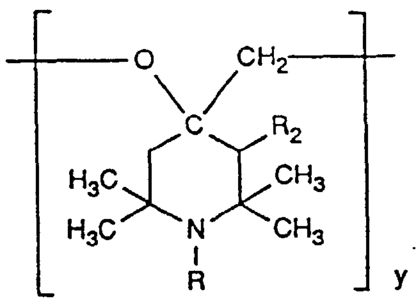

(XXV) ,

dans laquelle R et $R_2$ ont la signification donnée dans la revendication 6 et y peut varier entre 10 et 100.

**18.** Compositions pigmentaires selon la revendication 1, caractérisées en ce qu'on utilise des polymères comportant un motif répétitif de formule

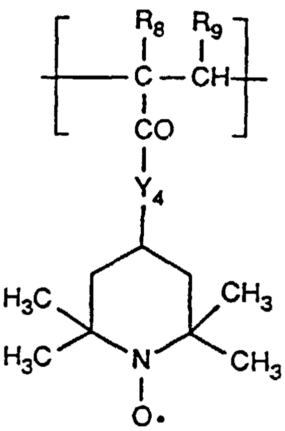

,

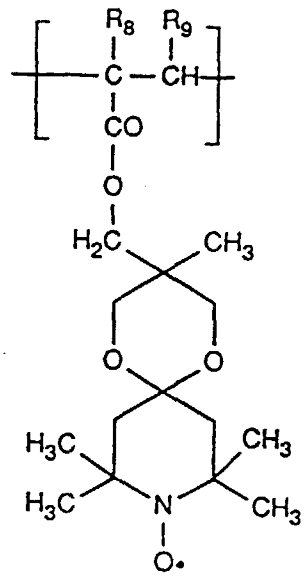

,

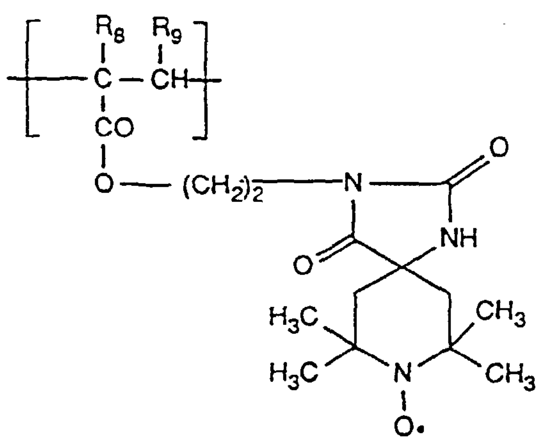

,

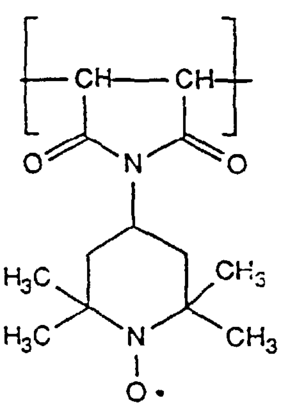

ou

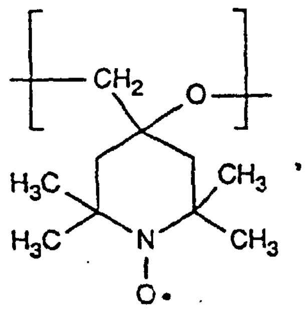

dans lesquelles $R_8$ et $R_9$, indépendamment l'un de l'autre, représentent l'hydrogène ou méthyle et $Y_4$ représente -O- ou -NH-, et des motifs répétitifs de formule

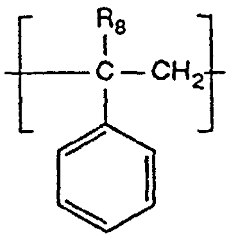

ou

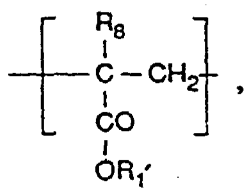

ou $R_8$ a la signification donnée ci-dessus, et $R_1$' représente l'hydrogène ou méthyle, peuvent également apparaître.

**19.** Compositions pigmentaires selon la revendication 1, caractérisées en ce qu'on utilise des polymères comportant un motif répétitif de formule

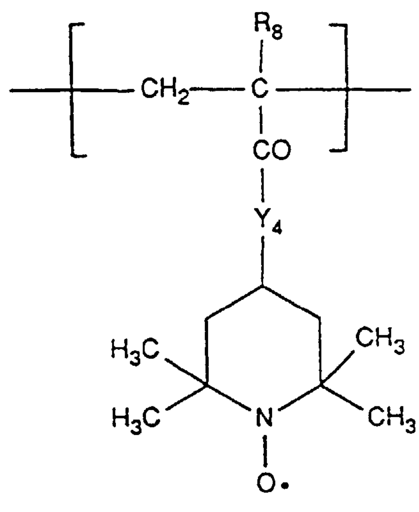

dans laquelle $R_8$ représente l'hydrogène ou méthyle, et $Y_4$ représente -O- ou -NH-.

**20.** Procédé de stabilisation contre les effets de la lumière et les intempéries des pigments pris dans le groupe constitué de dicétopyrrolopyrroles, de pigments azoïques, de quinacridones, de quinophtalones, de phtalocyanines, d'indanthrones, de flavanthrones, de pyranthrones, d'anthraquinones, de pérylènes, de dioxazines, de périnones, du thioindigo, d'isoindolines, d'isoindolinones et de complexes métalliques, par mélange ou par enduction des particules pigmentaires de 0,01 à 100 % en poids, par rapport au pigment, d'un polymère de condensation ou d'addition, dont le motif moléculaire répétitif comporte un reste avec un groupe nitroxyle ou hydroxylamino ou est substitué par un groupe latéral comportant un groupe nitroxyle ou hydroxylamino, ainsi que ses copolymères entre eux ou avec des composants ne comportant pas des groupes nitroxyle ou hydroxylamino.

**21.** Procédé selon la revendication 20, caractérisé en ce qu'on utilise au lieu du composé nitroxylé, un précurseur correspondant comportant un groupe >N-OT, dans lequel T représente alkyle en $C_1$-$C_{12}$, qui est libéré lors du traitement thermique du composé nitroxylé.

**22.** Matière organique de haut poids moléculaire contenant une composition pigmentaire selon la revendication 1.

**23.** Matière organique de haut poids moléculaire selon la revendication 21, caractérisée en ce qu'il s'agit d'un vernis.

**24.** Matière organique de haut poids moléculaire selon la revendication 22, caractérisée en ce qu'il s'agit d'un vernis pour automobile.